# EUROPEAN PATENT SPECIFICATION

(11) **EP 3 846 420 B1**
(45) Date of publication and mention of the grant of the patent: **19.02.2025**
(21) Application number: 18934483.1
(22) Date of filing: 17.09.2018
(51) Int. Cl.: H04M 1/02, H02J 50/30, H04B 10/80, H04M 1/18

(54) **WATERPROOF MOBILE INTELLIGENT TERMINAL, CHARGER AND METHOD FOR CONTROLLING LIGHT CHARGING**
WASSERDICHTES MOBILES INTELLIGENTES ENDGERÄT, LADEGERÄT UND VERFAHREN ZUR STEUERUNG DER LICHTLADUNG
TERMINAL INTELLIGENT MOBILE ÉTANCHE À L'EAU, CHARGEUR ET PROCÉDÉ DE COMMANDE DE CHARGE DE LUMIÈRE

(43) Date of publication of application: 07.07.2021
(73) Proprietor: Huawei Technologies Co., Ltd., Longgang District Shenzhen, Guangdong 518129 (CN)
(72) Inventor: LUO, Pengfei, Shenzhen, Guangdong 518129 (CN)
(74) Representative: Maiwald GmbH
(86) International application number: PCT/CN2018/105986
(87) International publication number: WO 2020/056551

(56) References cited:
- CN-A- 103 972 597
- CN-A- 105 141 025
- CN-A- 107 251 365
- CN-U- 201 966 669
- US-A1- 2007 069 684
- US-A1- 2007 114 967
- US-A1- 2015 162 781
- US-A1- 2016 087 484
- US-A1- 2018 191 192

## Description

### TECHNICAL FIELD

This application relates to the field of charging technologies, and in particular, to a waterproof mobile intelligent terminal, and a mobile computer system.

### BACKGROUND

At present, waterproof technologies have been widely applied to a mobile intelligent terminal, for example, a mobile phone and a tablet computer. The wide application of the waterproof technologies enables the mobile intelligent terminal to have a waterproof feature, so that a user can use the mobile intelligent terminal in a watery environment, for example, a rainy day or a pool without worrying about water entering the mobile intelligent terminal and causing damage to the mobile intelligent terminal. This greatly expands application scenarios of the mobile intelligent terminal.

However, most mobile intelligent terminals need to be charged by a charging device. Therefore, even a mobile intelligent terminal with a waterproof feature is usually provided with a charging interface, and the charging interface is usually of a concave structure. When the mobile intelligent terminal with the waterproof feature is immersed in water, although water may not enter the mobile phone, it is easy to accumulate water in the charging interface. If a user charges the mobile intelligent terminal when there is water accumulated in the charging interface, the mobile intelligent terminal may be short-circuited, causing damage to the mobile intelligent terminal or even endangering personal safety of the user.

CN 103 972 597 A1 describes a charging method and a charging apparatus. The method is applied to the charging apparatus. The charging apparatus comprises a photoelectric conversion module; and the charging apparatus can convert electric energy into optical energy, transmit the optical energy to electronic equipment possessing the photoelectric conversion module, and enables the photoelectric conversion module to convert the optical energy into the electric energy in order to charge the electronic equipment. The method comprises the following steps: detecting that whether a positional relation between the charging apparatus and the electronic equipment satisfies a predetermined condition or not in the process charging the electronic equipment by the charging apparatus; generating a terminating instruction when the positional relation between the charging apparatus and the electronic equipment satisfies the predetermined condition; and executing the terminating instruction, and controlling the photoelectric conversion module in a nonworking state in order to terminate the charging of the electronic equipment by the charging apparatus.

### SUMMARY

This application provides a waterproof mobile intelligent terminal, and a mobile computer system, to resolve a prior-art problem that a mobile intelligent terminal may be short-circuited and damaged and personal safety of a user may be endangered when the mobile intelligent terminal is charged when there is water accumulated in a charging interface of the mobile intelligent terminal. The invention is defined by the appended claims.

### BRIEF DESCRIPTION OF DRAWINGS

The following examples/aspects/embodiments corresponding to FIGS. 2, 7, 10(b), 11(b), and 16-18 are not encompassed by the wording of the claims and are present for illustration purposes only.
FIG. 1 is a diagram of a charging scenario of a mobile intelligent terminal with a waterproof feature in the prior art;
FIG. 2 is a schematic structural diagram of a first embodiment of a waterproof mobile intelligent terminal;
FIG. 3 is a schematic structural diagram of a second embodiment of the waterproof mobile intelligent terminal;
FIG. 4 is a schematic structural diagram of a third embodiment of the waterproof mobile intelligent terminal;
FIG. 5 is a schematic structural diagram of a fourth embodiment of the waterproof mobile intelligent terminal;
FIG. 6 is a schematic structural diagram of a fifth embodiment of the waterproof mobile intelligent terminal;
FIG. 7 is a schematic structural diagram of a first embodiment of a charger;
FIG. 8 is a schematic structural diagram of a second embodiment of the charger;
FIG. 9 is a schematic structural diagram of a third embodiment of the charger;
FIG. 10(a) is a schematic diagram of a first arrangement manner of a magnetic module;
FIG. 10(b) is a schematic diagram of a second arrangement manner of the magnetic module;
FIG. 10(c) is a schematic diagram of a third arrangement manner of the magnetic module;
FIG. 10(d) is a schematic diagram of a fourth arrangement manner of the magnetic module;
FIG. 10(e) is a schematic diagram of a fifth arrangement manner of the magnetic module;
FIG. 10(f) is a schematic diagram of a sixth arrangement manner of the magnetic module;
FIG. 11(a) is a schematic diagram of a seventh arrangement manner of the magnetic module
FIG. 11(b) is a schematic diagram of an eighth arrangement manner of the magnetic module;
FIG. 11(c) is a schematic diagram of a ninth arrangement manner of the magnetic module;
FIG. 11(d) is a schematic diagram of a tenth arrangement manner of the magnetic module;
FIG. 11(e) is a schematic diagram of an eleventh arrangement manner of the magnetic module;
FIG. 11(f) is a schematic diagram of a twelfth arrangement manner of the magnetic module;
FIG. 12 is a schematic structural diagram of a fourth embodiment of the charger;
FIG. 13 is a schematic structural diagram of a fifth embodiment of the charger;
FIG. 14 is a schematic structural diagram of a charging cable;
FIG. 15 is a schematic diagram of a mobile computer system;
FIG. 16 is a flowchart of an optical charging method;
FIG. 17 is a flowchart of step S103 of the optical charging method; and
FIG. 18 is a flowchart of performing authentication on a charger by a mobile intelligent terminal.

### DESCRIPTION OF EMBODIMENTS

The following clearly describes the technical solutions in the embodiments of this application with reference to the accompanying drawings in the embodiments of this application. Definitely, the described embodiments are merely some but not all of the embodiments of this application. All other embodiments obtained by a person of ordinary skill in the art based on the embodiments of this application without creative efforts shall fall within the protection scope of this application.

At present, waterproof technologies have been widely applied to a mobile intelligent terminal, for example, a mobile phone and a tablet computer. The wide application of the waterproof technologies enables the mobile intelligent terminal to have a waterproof feature, so that a user can use the mobile intelligent terminal in a watery environment, for example, a rainy, snowy, or foggy day or a pool without worrying about water entering the mobile intelligent terminal and causing damage to the mobile intelligent terminal. This greatly expands application scenarios of the mobile intelligent terminal.

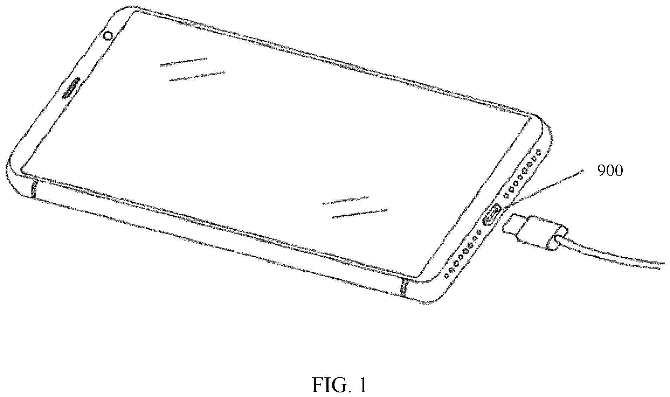

FIG. 1 is a diagram of a charging scenario of a mobile intelligent terminal with a waterproof feature in the prior art. As shown in FIG. 1, most mobile intelligent terminals need to be charged by a charging device. Therefore, even a mobile intelligent terminal with a waterproof feature is usually provided with a charging interface 900, and the charging interface is usually of a concave structure. When the mobile intelligent terminal with the waterproof feature is immersed in water, although water may not enter the mobile phone, it is easy to accumulate water in the charging interface. If a user charges the mobile intelligent terminal when there is water accumulated in the charging interface, the mobile intelligent terminal may be short-circuited, causing damage to the mobile intelligent terminal or even endangering personal safety of the user.

In addition, in recent years, hardware performance of the mobile intelligent terminal has been continuously improved, but a capacity technology of a lithium battery technology has not made a major breakthrough. Limited by a size of the mobile intelligent terminal, a capacity of a battery has become increasingly difficult to maintain a long battery lifespan of the mobile intelligent terminal. Therefore, during use of mobile intelligent terminals, some users usually charge the mobile intelligent terminals at least once a day or even when the users are using the mobile intelligent terminals. In this case, water accumulated in a charging interface of a mobile intelligent terminal that has been immersed in water may not evaporate in time. If a user charges the mobile intelligent terminal at this time, a risk of short-circuit may increase, endangering personal safety of the user.

To resolve a prior-art problem that when the mobile intelligent terminal is charged when there is water accumulated in the charging interface of the mobile intelligent terminal, the mobile intelligent terminal may be short-circuited, causing damage to the mobile intelligent terminal and endangering personal safety of the user, an embodiment of this application provides a waterproof mobile intelligent terminal. When the mobile intelligent terminal is immersed in water or a surface of the mobile terminal is wet, the user can still charge the mobile intelligent terminal or transmit data to or from the mobile intelligent terminal without worries and without causing short-circuiting of the mobile intelligent terminal, thereby ensuring personal safety of the user.

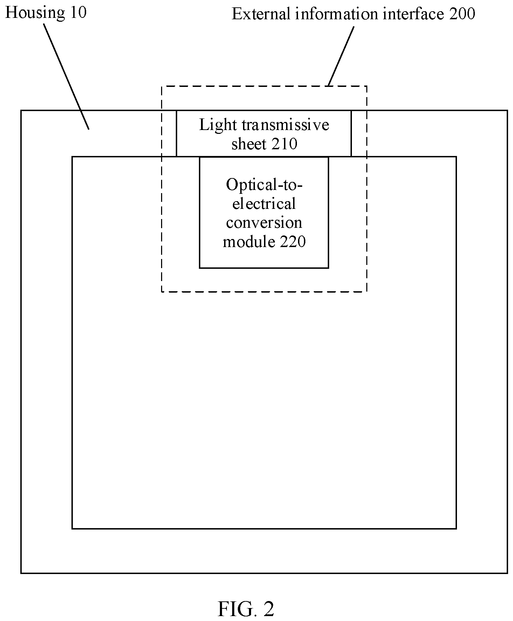

FIG. 2 is a schematic structural diagram of a first embodiment of the waterproof mobile intelligent terminal.

As shown in FIG. 2, a housing 10 of the mobile intelligent terminal is provided with a waterproof structure, to prevent water from causing damage to an electronic device inside the mobile intelligent terminal when the mobile intelligent terminal falls into water. The waterproof structure includes a waterproof external information interface 200. The external information interface 200 includes a light transmissive sheet 210 of the housing 10 and an optical-to-electrical conversion module 220 disposed inside the housing 10. The optical-to-electrical conversion module 220 is configured to convert an optical signal that passes through the light transmissive sheet 210 into an electric signal.

For example, the mobile intelligent terminal may include a mobile phone, a tablet computer, an e-reader, a notebook computer, a 2-in-1 tablet, an in-vehicle computer, a POS (point of sale, point of sale information system) machine, and other mobile devices having one or more of features of a display screen, a touch input, a small keyboard, and a camera system.

For example, the housing 10 of the mobile intelligent terminal may be a metal housing (for example, an aluminum alloy housing, a magnesium aluminum alloy housing, or a stainless steel housing), a plastic housing (for example, a polycarbonate housing), glass, ceramic, or the like. The external information interface 200 may be disposed on a middle frame or a rear of the housing 10, so that a layout of a front screen of the mobile intelligent terminal is not affected. The light transmissive sheet 210 is made of a transparent material. An optical material that can be used as the light transmissive sheet 210 may include glass, quartz, sapphire, and the like. The light transmissive sheet 210 may be seamlessly embedded into the housing 10 of the mobile intelligent terminal, to ensure waterproofness of the housing 10. A light source from an external environment enters the housing 10 of the mobile intelligent terminal through the light transmissive sheet 210. In addition, if the mobile intelligent terminal is the glass housing 10, when a coating is sprayed on a glass surface, a hole-shaped area without coating may be reserved for use as the light transmissive sheet 210, so that an opening for embedding the light transmissive sheet 210 does not need to be formed in the housing 10, thereby further enhancing the waterproofness of the housing 10.

For example, the optical-to-electrical conversion module 220 may be an optical-to-electrical converter. The optical-to-electrical conversion module 220 can receive an optical signal that enters the housing 10 through the light transmissive sheet 210, and convert the optical signal into an electric signal. The electric signal may be used to charge the mobile intelligent terminal, transmit data, or the like. In addition, the optical signal may include a laser signal transmitted by a laser diode, or an infrared light signal, a visible light signal, an ultraviolet light signal, or the like transmitted by a light-emitting diode (light-emitting diode, LED).

According to the mobile intelligent terminal provided above, when a user needs to charge the mobile intelligent terminal or transmit data to or from the mobile intelligent terminal, energy or the data may be carried to an optical signal, and a device, for example, a charger or an optical fiber, that can generate and output an optical signal, is aligned with the light transmissive sheet 210 of the housing 10, so that the optical signal enters the housing 10 through the light transmissive sheet 210 and is received by the optical-to-electrical conversion module 220. Then, the optical-to-electrical conversion module 220 converts the optical signal into an electric signal. The electric signal may be used to provide electric energy for the mobile intelligent terminal, transmit data, and the like. Therefore, in the technical solution of this application, the mobile intelligent terminal does not need to be provided with a conventional electricity-based charging interface (for example, a lightning interface, a standard USB interface, a mini USB interface, a micro USB interface, a USB Type-C interface, a Thunderbolt interface, or a DisplayPort interface). Therefore, even after the mobile intelligent terminal is immersed in water, the user can charge the mobile intelligent terminal or transmit data to or from the mobile intelligent terminal without worrying about short-circuiting of the mobile intelligent terminal, the charger, or a charging cable, thereby ensuring personal safety of the user.

In an optional implementation, the housing 10 of the mobile intelligent terminal has a sealed waterproof structure configured to prevent water from entering the mobile intelligent terminal through a gap in the housing 10 when the mobile intelligent terminal falls into water.

For example, the sealed waterproof structure may include a sealant waterproof structure. For example, the housing 10 of the mobile intelligent terminal is connected to an electronic device, for example, a display screen by using a sealant, and a gap between the housing 10 and the display screen is filled with the sealant, so that a sealed space is formed inside the housing 10, and water is prevented from entering the mobile intelligent terminal. The sealant may be an adhesive (for example, a liquid adhesive) with no fixed shape, or an adhesive gasket, a sealing ring, a tape, or the like with a fixed shape.

For example, the sealed waterproof structure may further include an annular gasket waterproof structure. For example, an annular gasket is disposed at a component, for example, a button, a SIM card slot, or a TF card slot inside the housing 10, so that the annular gasket fills a gap between the housing 10 and the foregoing component, thereby preventing water from entering the mobile intelligent terminal. The annular gasket may be a rubber gasket.

For example, the sealing mechanism may further include a mesh waterproof structure. For example, a grid with a fine mesh is installed on a speaker or a microphone of the mobile intelligent terminal, and water is made, by using features of inner clustering and surface tension of the water, to stick together on the grid instead of passing through the mesh.

In this way, the housing 10 of the mobile intelligent terminal has the sealed waterproof structure, and the mobile intelligent terminal no longer needs a charging interface due to the use of the optical signal for charging, so that waterproof reliability of the mobile intelligent terminal is further enhanced, and a user can use the mobile intelligent terminal in a water-immersed environment without worries.

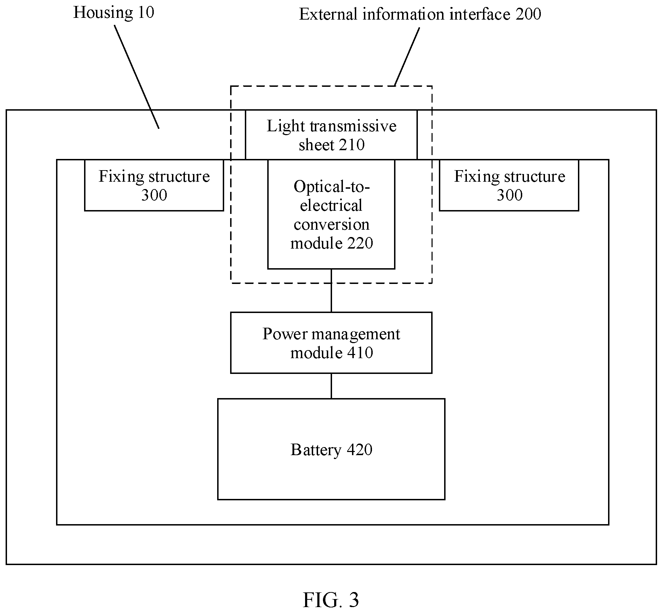

FIG. 3 is a schematic structural diagram of a second embodiment of the waterproof mobile intelligent terminal.

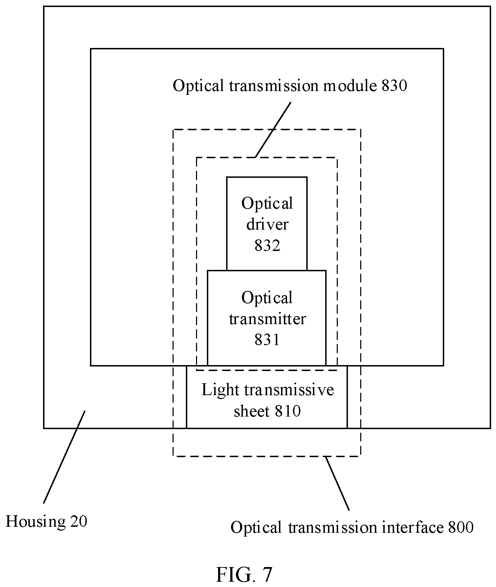

As shown in FIG. 3, based on the structure shown in FIG. 2, a fixing structure 300 is further disposed inside the housing 10 of the mobile intelligent terminal. The fixing structure 300 is configured to fix the charger, so that an optical transmission interface 800 (referring to FIG. 7) of the charger is coupled to the external information interface 200. Correspondingly, a fixing structure 300 is also correspondingly disposed near the optical transmission interface 800 of the charger, so that the mobile intelligent terminal and the charger are fixed through engagement between the fixing interfaces of the mobile intelligent terminal and the charger. After the mobile intelligent terminal and the charger are fixed, a light transmissive sheet 810 (referring to FIG. 7) of the optical transmission interface 800 of the charger is exactly aligned with the light transmissive sheet 210 of the external information interface 200, so that an optical signal transmitted through the optical transmission interface 800 may enter the housing 10 through the light transmissive sheet 210 of the external information interface 200, and does not leak into the environment, thereby preventing the optical signal from causing harm to a user or an object in the environment.

In addition, further as shown in FIG. 3, the mobile intelligent terminal further includes a power management module 410. The power management module 410 is configured to provide electric energy for an electronic device in the mobile intelligent terminal by using the electric signal converted by the optical-to-electrical conversion module 220, for example, charge a battery 420. The power management module 410 may include a power management chip (power management integrated circuits, PMIC), for example, a pulse width modulation integrated circuit (pulse width modulation integrated circuit, PWMIC), configured to perform voltage regulation on the electric signal converted by the optical-to-electrical conversion module 220, adjust power consumption of the mobile intelligent terminal, and control power for charging the mobile intelligent terminal based on parameters such as a battery level, real-time power consumption, and battery performance of the mobile intelligent terminal.

In this way, the power management module 410 provides electric energy for the electronic device in the mobile intelligent terminal, so that the mobile intelligent terminal can be charged without a need to dispose a charging interface on the mobile intelligent terminal, and waterproof reliability of the mobile intelligent terminal is further enhanced.

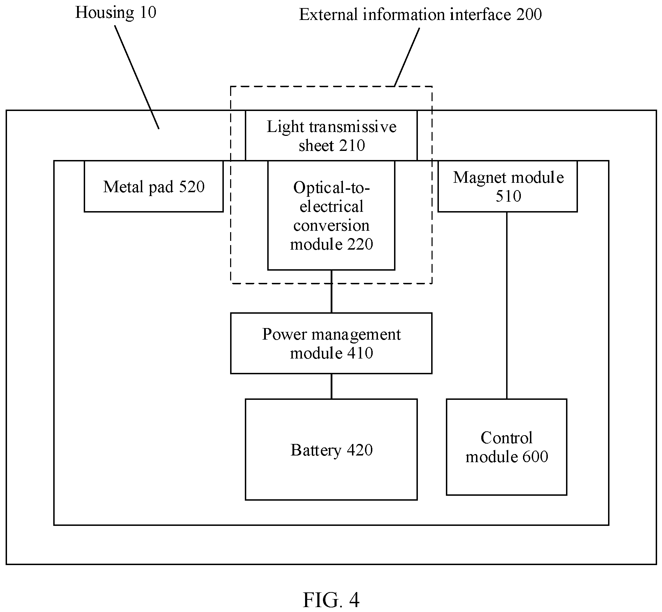

FIG. 4 is a schematic structural diagram of a third embodiment of the waterproof mobile intelligent terminal.

As shown in FIG. 4, the fixing structure 300 is a magnetic module. The magnetic module includes a magnet module 510 configured to provide an electromagnetic attraction force. Optionally, the magnetic module further comprises a metal pad 520 corresponding to the magnet module 510. The magnetic module is configured to fix the mobile intelligent terminal and the charger by using the electromagnetic attraction force.

Further, the magnet module 510 may include an electromagnet or a permanent magnet material. The electromagnet is provided with a current by the mobile intelligent terminal, to activate or remove magnetism of the electromagnet. The permanent magnet material may include a natural magnet, an artificial magnet, or the like. The metal pad 520 may include metal substances such as iron, nickel, cobalt, and alloys that can be magnetized by an external magnetic field. Corresponding to the magnetic module of the mobile intelligent terminal, the fixing structure 300 of the charger is a magnetic module, so that the mobile intelligent terminal and the charger are fixed by using the electromagnetic attraction force, and no additional clamping structure or the like needs to be disposed on the housing 10 of the mobile intelligent terminal or the charger. Therefore, flatness and integrity of the housing 10 are not affected, and waterproof performance of the waterproof structure of the housing 10 is not affected, thereby ensuring waterproof reliability of the mobile intelligent terminal.

In addition, further as shown in FIG. 4, the mobile intelligent terminal further includes a control module 600 disposed inside the housing 10. The control module 600 is configured to control the electromagnetic attraction force or a magnetic polarity of the magnet module 510, for example, to activate or remove magnetism, and an N pole or an S pole. In this way, the control module 600 may control the electromagnetic attraction force of the magnet module 510 to fix the mobile intelligent terminal to the charger or separate the mobile intelligent terminal from the charger, and a user does not need to exert an external force, thereby ensuring that the waterproof structure of the housing 10 of the mobile intelligent terminal is not invalidated due to an external force, thereby ensuring waterproof reliability of the mobile intelligent terminal.

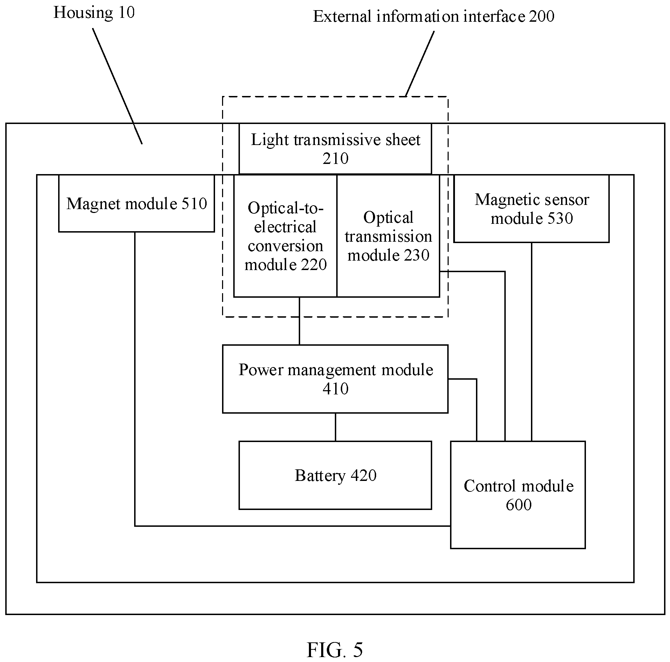

FIG. 5 is a schematic structural diagram of a fourth embodiment of the waterproof mobile intelligent terminal.

As shown in FIG. 5, in an optional implementation, based on the structure shown in FIG. 4, the mobile intelligent terminal further includes a magnetic sensor module 530 and an optical transmission module 230 that are disposed inside the housing 10. The magnetic sensor module 530 is configured to detect a connection status between the mobile intelligent terminal and the charger. The optical transmission module is configured to transmit an optical signal according to an indication of the control module 600 when the mobile intelligent terminal is connected to the charger. For example, the optical transmission module may send the optical signal to the charger, and the optical signal may carry battery information of the mobile intelligent terminal (information such as a manufacturer, a serial number, a designed capacity, an actual capacity, a quantity of cycles, and a temperature), battery level information, or optical communication rate information, and may further include information, of the mobile intelligent terminal, such as received optical power, available battery receive power, and real-time power information in a charging process, so that the charger sends an optical signal based on the foregoing information by using optical power that can be withstood by the mobile intelligent terminal, thereby ensuring safety of the charging process. In addition, the mobile intelligent terminal may further send, by using the optical transmission module, an optical signal to another terminal having an optical communication capability, to implement optical signal interaction between the mobile intelligent terminal and the another terminal, including signaling interaction, data interaction, and the like.

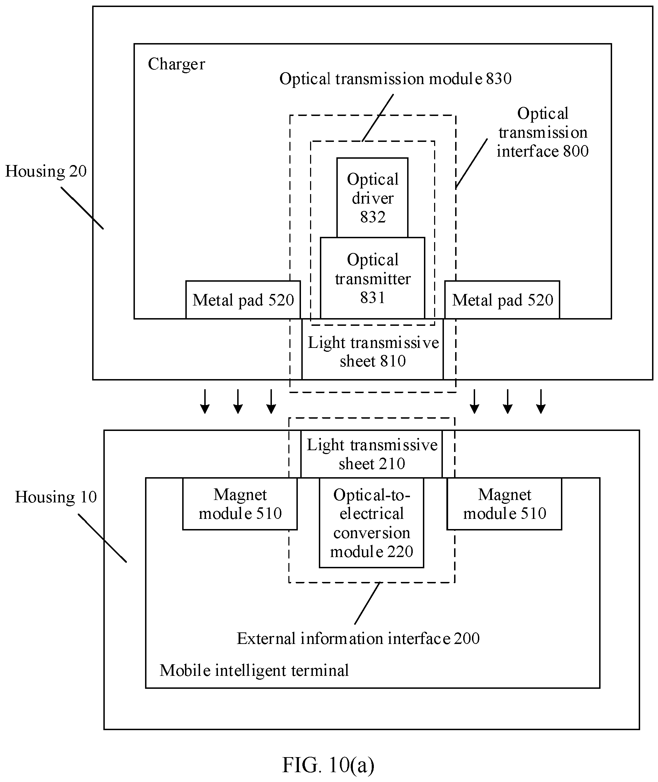

In addition, the control module 600 may further control the magnetism of the magnet module 510 based on magnetic field strength to be detected by the magnetic sensor module 530. For example, when the magnetic field strength reaches a preset threshold, the control module 600 activates the magnetism of the magnet module 510, so that the magnet module 510 of the mobile intelligent terminal actively attracts the metal pad 520 (referring to FIG. 10(a)) of the charger, thereby fixing the mobile intelligent terminal and the charger to each other and causing the external information interface 200 of the mobile intelligent terminal to be coupled to the optical transmission interface 800 of the charger.

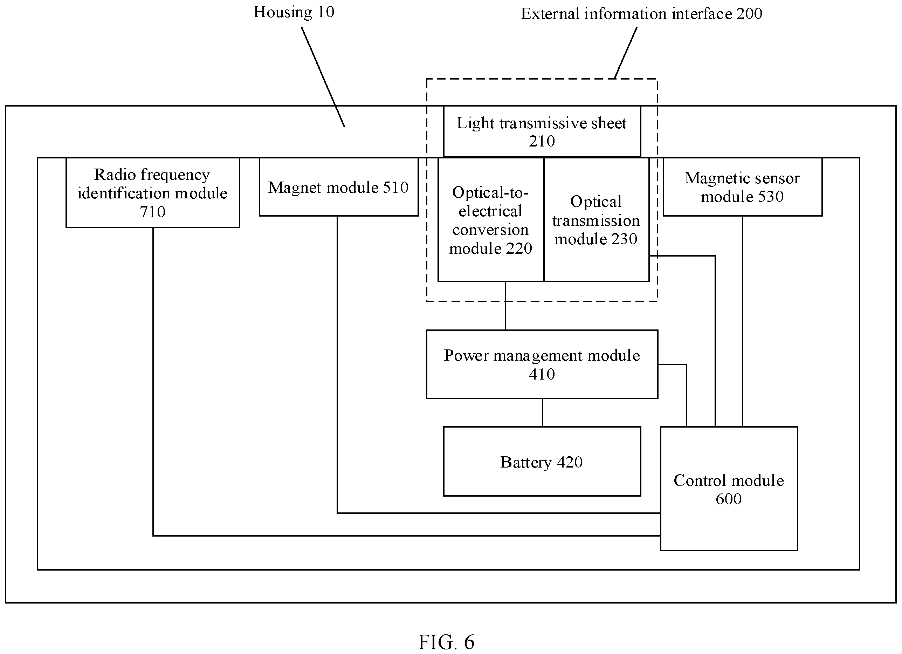

FIG. 6 is a schematic structural diagram of a fifth embodiment of the waterproof mobile intelligent terminal.

As shown in FIG. 6, in an optional implementation, based on the structures shown in FIG. 2 to FIG. 5, the mobile intelligent terminal further includes a radio frequency identification module 710 disposed inside the housing 10. The radio frequency identification module 710 is configured to read authentication information of the charger. The authentication information may include a product serial number of the charger, preset product authentication information, or the like.

In this way, the mobile intelligent terminal reads the authentication information of the charger by using the radio frequency identification module 710, may perform authentication on the charger, and may further perform a corresponding operation based on an authentication result, such as rejecting to receive an optical signal sent by a charger that fails to be authenticated, thereby preventing the mobile intelligent terminal from being damaged by a poor-quality charger.

In addition, the mobile intelligent terminal further includes: an application processor, configured to execute various application programs; and a communications module, configured to implement wireless communication. In this way, a user can use the mobile intelligent terminal in various water-immersed environments, including running an application program, having a call or network access by using a wireless communication function, and the like.

The embodiments of this application provide a charger, configured to charge the waterproof mobile intelligent terminal provided in this application.

FIG. 7 is a schematic structural diagram of a first embodiment of the charger.

As shown in FIG. 7, the charger includes an optical transmission interface 800. The optical transmission interface 800 includes a light transmissive sheet 810 disposed on a housing 20 of the charger, and an optical transmission module 830 disposed inside the housing 20. The optical transmission module 830 is configured to transmit an optical signal through the light transmissive sheet 810. The light transmissive sheet 810 is made of a transparent material, and an optical material that can be used as the light transmissive sheet 810 may include glass, quartz, sapphire, and the like. Preferably, the light transmissive sheet 810 of the charger is of a same size as the light transmissive sheet 210 (referring to FIG. 2) of the mobile intelligent terminal, to ensure that transmission of an optical signal between the two light transmissive sheets is not obstructed. In addition, the optical transmission module 830 includes an optical transmitter 831 and an optical driver 832. The optical transmitter 831 is configured to transmit an optical signal, and the optical driver 832 is configured to control power of the optical signal. The optical transmitter 831 may be, for example, a laser diode, a light-emitting diode, or a laser generator.

According to the charger provided above, when a user needs to charge the mobile intelligent terminal, the user may align the optical transmission interface 800 of the charger with the external information interface 200 (referring to FIG. 2) of the mobile intelligent terminal, so that the external information interface 200 of the mobile intelligent terminal is coupled to the optical transmission interface 800 of the charger and can receive the optical signal sent by the optical transmission module 830 of the charger. The optical signal may be received by an optical-to-electrical conversion module 220 of the mobile intelligent terminal and converted into an electric signal, to provide electric energy for the mobile intelligent terminal. Therefore, in the technical solution of this application, the mobile intelligent terminal does not need to be provided with a charging interface (for example, a lightning interface, a standard USB interface, a mini USB interface, a micro USB interface, a USB Type-C interface, a Thunderbolt interface, or a DisplayPort interface). Therefore, even after the mobile intelligent terminal falls into water, the user can charge the mobile intelligent terminal or transmit data to or from the mobile intelligent terminal without worrying about short-circuiting of the mobile intelligent terminal, the charger, or a charging cable, thereby ensuring personal safety of the user.

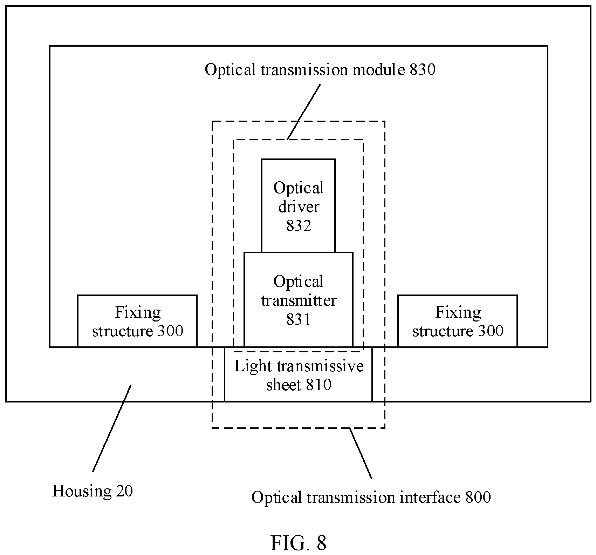

FIG. 8 is a schematic structural diagram of a second embodiment of the charger.

As shown in FIG. 8, the charger further includes the fixing structure 300 disposed in the housing 20 of the charger. The fixing structure 300 is configured to fix the mobile intelligent terminal. After the mobile intelligent terminal is fixed, the light transmissive sheet 810 of the optical transmission interface 800 of the charger is exactly aligned with the light transmissive sheet 210 of the external information interface 200. Therefore, an optical signal transmitted through the optical transmission interface 800 may enter the housing 10 of the mobile intelligent terminal through the external information interface 200, and does not leak into the environment, thereby preventing the optical signal from causing harm to a user or an object in the environment.

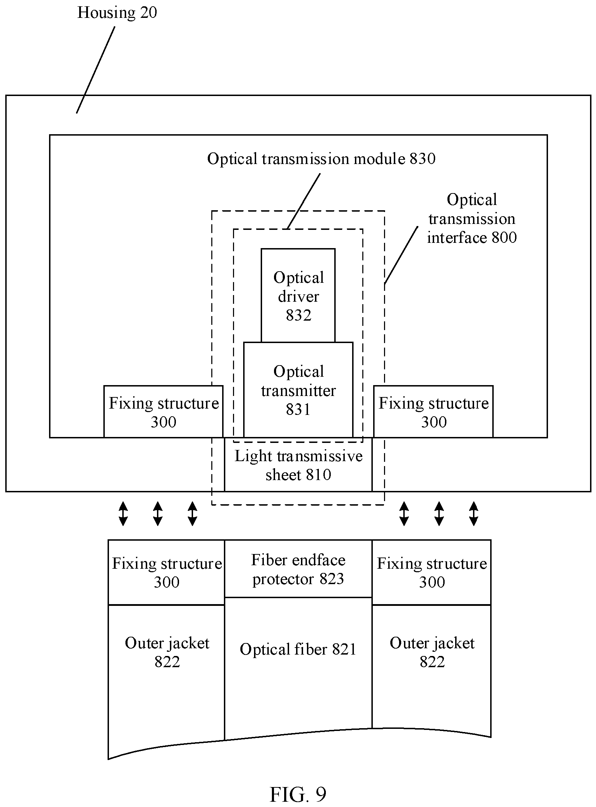

FIG. 9 is a schematic structural diagram of a third embodiment of the charger.

As shown in FIG. 9, in an optional implementation, the charger further includes a charging cable. The charging cable includes an optical fiber 821 and an outer jacket 822 that wraps the optical fiber 821, and is configured to transmit an optical signal of the transmission module to the mobile intelligent terminal. In addition, the charging cable is used as a part of the optical transmission interface 800, and fixing structures 300 are disposed at two ends of the charging cable. The fixing structures are engaged with a fixing structure of the mobile intelligent terminal and a fixing structure of the housing 20 of the charger, so that one end of the charging cable is connected to the housing 20 of the charger, and the other end is connected to the mobile intelligent terminal. In this way, the charger may be fixedly connected to the mobile intelligent terminal by using the charging cable, and the optical signal transmitted through the optical transmission interface 800 may be sent into the housing 10 of the mobile intelligent terminal by using the charging cable. In addition, a protective sleeve 823 for protecting the optical fiber 821 may be further disposed at two ends of the charging cable. The protective sleeve 823 is configured to close two ends of the optical fiber 821, and is opened only when the charging cable is connected to the charger or the mobile intelligent terminal, thereby preventing the optical signal from leaking into the environment, and ensuring safety of a user.

As shown in FIG. 8 and FIG. 9, the embodiments of this application provide two forms of chargers. In a first form, as shown in FIG. 8, the charger does not include a charging cable, so that the charger is directly fixedly connected to the mobile intelligent terminal by using a fixing structure. In another form, as shown in FIG. 9, the charger includes a charging cable, so that the charger is fixedly connected to the mobile intelligent terminal by using the charging cable. In addition, in the two forms of chargers shown in FIG. 8 and FIG. 9, the fixing structure may be a magnetic module, and the magnetic module includes a magnet module 510 configured to provide an electromagnetic attraction force and/or a metal pad 520 corresponding to the magnet module 510. Further, the magnet module 510 may include an electromagnet or a permanent magnet material. The electromagnet is provided with a current by the mobile intelligent terminal, to activate or remove magnetism of the electromagnet. The permanent magnet material may include a natural magnet, an artificial magnet, or the like. The metal pad 520 may include metal substances such as iron, nickel, cobalt, and alloys that can be magnetized by an external magnetic field.

Specifically, according to the charger shown in FIG. 8, a magnetic module disposed inside the housing 20 of the charger may be fixedly connected to the mobile intelligent terminal provided with a magnetic module by using an electromagnetic attraction force of the magnetic module. Therefore, no additional clamping structure or the like needs to be disposed on the housing 20 of the charger or the housing 10 of the mobile intelligent terminal, so that flatness and integrity of the housing 20 of the mobile intelligent terminal are not affected, and waterproof performance of the housing 10 of the mobile intelligent terminal is not affected, thereby ensuring waterproof reliability of the mobile intelligent terminal.

Specifically, according to the charger shown in FIG. 9, a magnetic module is disposed inside the housing 20 of the charger, and magnetic modules are also disposed at two ends of the charging cable. During charging, one end of the charging cable is fixedly connected to the housing 20 of the charger by using an electromagnetic attraction force of the magnetic module, causing the optical fiber 821 of the charging cable to be aligned with the light transmissive sheet 810 of the charger, so that the optical signal transmitted by the optical transmission module 830 enters the optical fiber 821 through the light transmissive sheet 810 for transmission. The other end of the charging cable is connected to the mobile intelligent terminal by using the electromagnetic attraction force of the magnetic module, causing the optical fiber 821 of the charging cable to be aligned with the light transmissive sheet 810 of the mobile intelligent terminal, so that the optical signal generated by the optical transmission module 830 of the charger is sent to the optical-to-electrical conversion module 220 of the mobile intelligent terminal through the optical fiber 821. In this way, no additional clamping structure needs to be disposed on the housing 20 of the charger or the housing 10 of the mobile intelligent terminal, so that flatness and integrity of the housing 10 of the mobile intelligent terminal are not affected, and waterproof performance of the housing 10 of the mobile intelligent terminal is not affected, thereby ensuring waterproof reliability of the mobile intelligent terminal.

In the embodiments of this application, the magnetic module of the mobile intelligent terminal, the magnetic module in the housing 20 of the charger, and the magnetic module on the charging cable may be arranged in a plurality of manners corresponding to each other, so that the mobile intelligent terminal can be directly fixed to the charger or fixed to the charger by using the charging cable.

With reference to FIG. 10(a) to FIG. 10(f), the following describes in detail a possible arrangement manner of the magnetic modules of the charger and the mobile intelligent terminal when the charger is the charger of the structure shown in FIG. 8.

Referring to FIG. 10(a), in a first implementable arrangement manner, the housing 20 of the charger is provided with a metal pad 520, and the mobile intelligent terminal is correspondingly provided with a magnet module 510. In the foregoing arrangement manner, the magnet module 510 of the mobile intelligent terminal can attract the metal pad 520 in the housing 20 of the charger, causing the light transmissive sheet 210 of the mobile intelligent terminal to be aligned with the light transmissive sheet 810 of the charger and fixed to the housing 20 of the charger, so that the external information interface 200 of the mobile intelligent terminal is coupled to the optical transmission interface 800 of the charger.

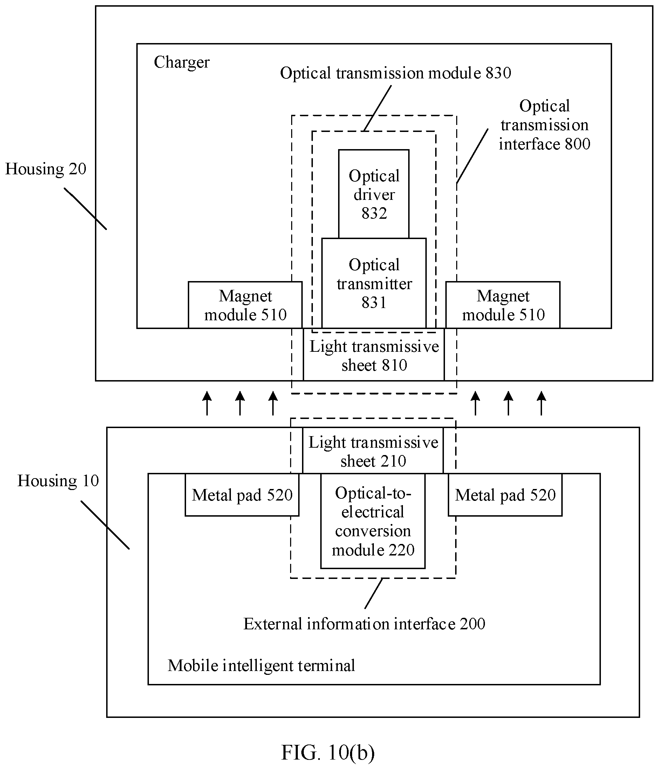

Referring to FIG. 10(b), in a second implementable arrangement manner, the housing 20 of the charger is provided with a magnet module 510, and the mobile intelligent terminal is correspondingly provided with a metal pad 520. In the foregoing arrangement manner, the magnet module 510 in the housing 20 of the charger can attract the metal pad 520 of the mobile intelligent terminal, causing the light transmissive sheet 210 of the mobile intelligent terminal to be aligned with the light transmissive sheet 810 of the charger and fixed to the housing 20 of the charger, so that the external information interface 200 of the mobile intelligent terminal is coupled to the optical transmission interface 800 of the charger.

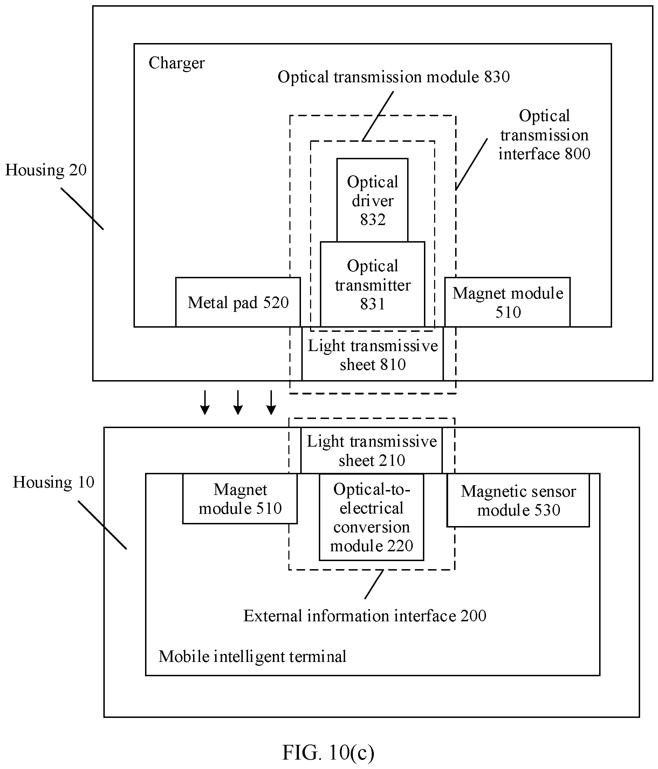

Referring to FIG. 10(c), in a third implementable arrangement manner, one side of the optical transmission interface 800 of the housing 20 of the charger is provided with a metal pad 520, and the other side is provided with a magnet module 510. One side of the external information interface 200 of the mobile intelligent terminal is provided with a magnet module 510 corresponding to the charger, and the other side is provided with a magnetic sensor module 530 corresponding to the charger. In the foregoing arrangement manner, when the optical transmission interface 800 of the charger and the external information interface 200 of the mobile intelligent terminal approach each other, the magnetic sensor module 530 of the mobile intelligent terminal can sense a small-to-large change in a magnetic field of the magnet module 510 of the charger, and further magnetism of the magnet module 510 of the mobile intelligent terminal is activated, so that the magnet module 510 of the mobile intelligent terminal actively attracts the metal pad 520 in the housing 20 of the charger, causing the light transmissive sheet 210 of the mobile intelligent terminal to be aligned with the light transmissive sheet 810 of the charger and fixed to the housing 20 of the charger, so that the external information interface 200 of the mobile intelligent terminal is coupled to the optical transmission interface 800 of the charger. In addition, in a preferred solution, magnetic polarities of the magnet module 510 of the mobile intelligent terminal and the magnet module 510 in the housing 20 of the charger are the same, so that the magnet module 510 of the mobile intelligent terminal and the magnet module 510 in the housing 20 of the charger do not attract each other due to co-polarity mutual exclusion. Therefore, the magnet module 510 of the mobile intelligent terminal only attracts the metal pad 520 in the housing 20 of the charger, thereby implementing a foolproof design.

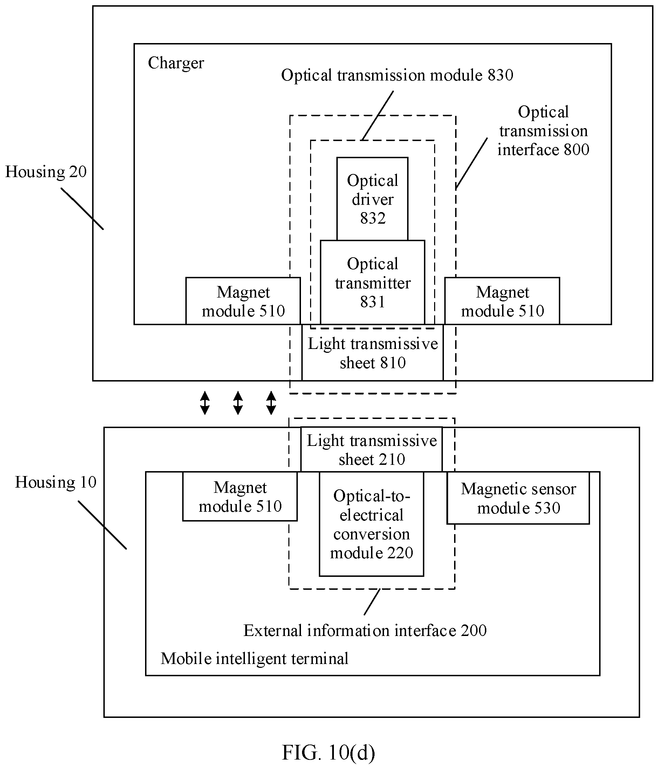

Referring to FIG. 10(d), in a fourth implementable arrangement manner, both sides of the optical transmission interface 800 of the charger are provided with magnet modules 510. One side of the external information interface 200 of the mobile intelligent terminal is provided with a magnet module 510, and the other side is provided with a magnetic sensor module 530. In addition, a magnetic polarity of at least one magnet module 510 in the housing 20 of the charger is opposite to that of the magnet module 510 of the mobile intelligent terminal. In the foregoing arrangement manner, when the optical transmission interface 800 of the charger and the external information interface 200 of the mobile intelligent terminal approach each other, the magnetic sensor module 530 of the mobile intelligent terminal can sense a small-to-large change in a magnetic field of the magnet module 510 in the housing 20 of the charger, and further magnetism of the magnet module 510 of the mobile intelligent terminal is activated, so that the magnet module 510 of the mobile intelligent terminal and the magnet module 510 in the housing 20 of the charger attract each other, causing the light transmissive sheet 210 of the mobile intelligent terminal to be aligned with the light transmissive sheet 810 of the charger and fixed to the housing 20 of the charger, so that the external information interface 200 of the mobile intelligent terminal is coupled to the optical transmission interface 800 of the charger. In addition, because both sides of the attraction are magnet modules 510 with magnetism, the mobile intelligent terminal is fixed to the charger more tightly and not easily loosened.

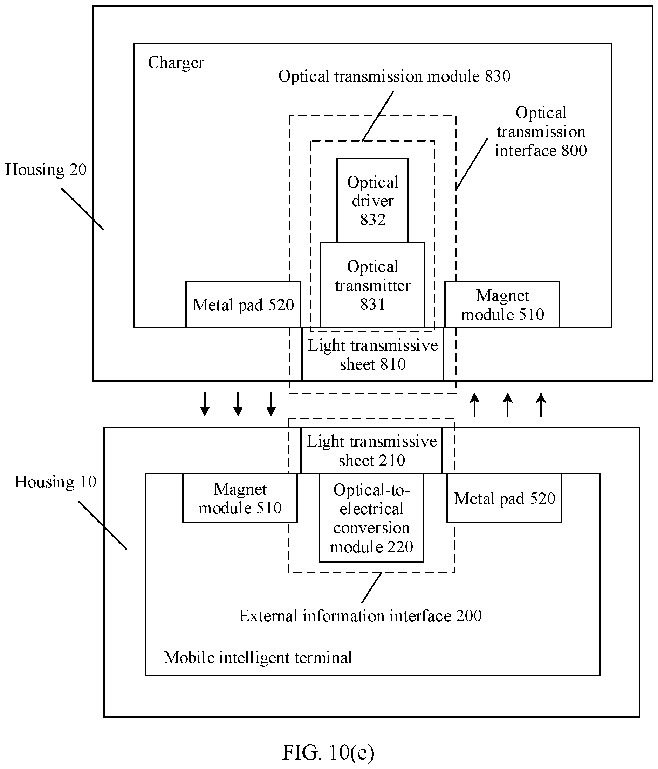

Referring to FIG. 10(e), in a fifth implementable arrangement manner, one side of the optical transmission interface 800 of the housing 20 of the charger is provided with a metal pad 520, and the other side is provided with a magnet module 510. One side of the external information interface 200 of the mobile intelligent terminal is provided with a magnet module 510 corresponding to the housing 20 of the charger, and the other side is provided with a metal pad 520 corresponding to the housing 20 of the charger. In addition, in a preferred solution, magnetic polarities of the magnet module 510 in the housing 20 of the charger and the magnet module 510 of the mobile intelligent terminal are the same. In the foregoing arrangement manner, when the optical transmission interface 800 of the charger and the external information interface 200 of the mobile intelligent terminal approach each other, the magnet module 510 of the mobile intelligent terminal attracts the metal pad 520 in the housing 20 of the charger, and the magnet module 510 in the housing 20 of the charger attracts the metal pad 520 of the mobile intelligent terminal, causing the light transmissive sheet 210 of the mobile intelligent terminal to be aligned with the light transmissive sheet 810 of the charger and fixed to the housing 20 of the charger, so that the external information interface 200 of the mobile intelligent terminal is coupled to the optical transmission interface 800 of the charger. In addition, the magnet module 510 of the mobile intelligent terminal and the magnet module 510 in the housing 20 of the charger are mutually exclusive due to the same magnetic polarities. Therefore, regardless of any angle at which a user causes the mobile intelligent terminal and the charger to approach each other, both the magnet module 510 in the mobile intelligent terminal and the magnet module 510 in the housing 20 of the charger automatically find the corresponding metal pads 520 respectively, thereby implementing a foolproof design.

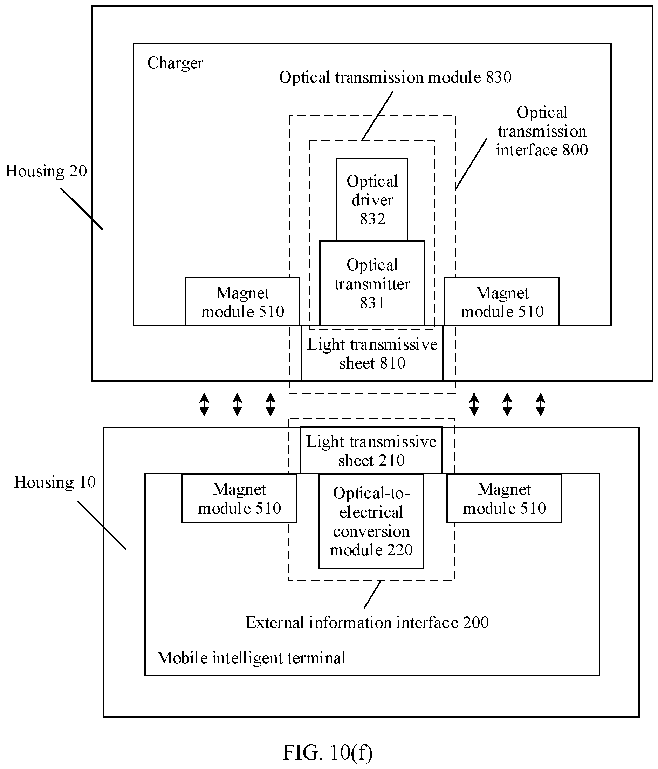

Referring to FIG. 10(f), in a sixth implementable arrangement manner, a magnet module 510 is disposed around the optical transmission interface 800 of the charger and a magnet module 510 is disposed around the external information interface 200 of the mobile intelligent terminal, and magnetic polarities of the magnet modules 510 are correspondingly oppositely disposed, so that the magnet module 510 of the mobile intelligent terminal and the magnet module 510 of the charger attract each other, causing the external information interface 200 of the mobile intelligent terminal to be coupled to the optical transmission interface 800 of the charger. In addition, because both sides of the attraction are magnet modules 510 with magnetism, the mobile intelligent terminal is fixed to the charger more tightly and not easily loosened.

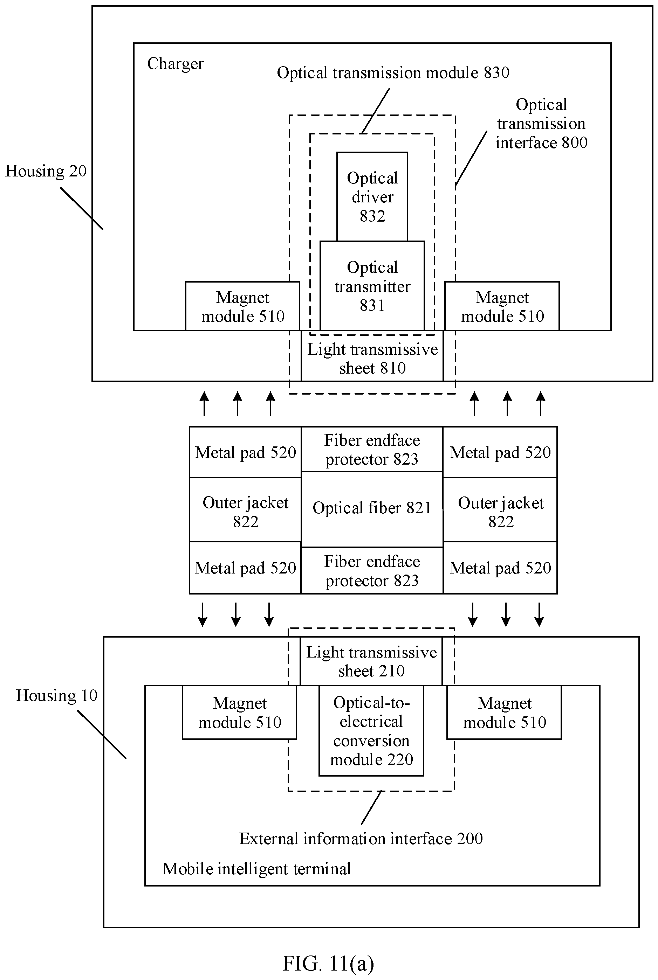

With reference to FIG. 11(a) to FIG. 11(f), the following describes in detail a possible step implementation of the magnetic modules of the charger and the mobile intelligent terminal when the charger is the charger of the structure shown in FIG. 9.

Referring to FIG. 11(a), in a first implementable arrangement manner, a magnet module 510 is disposed inside each of the housings 20 of the mobile intelligent terminal and the charger, and metal pads 520 are correspondingly disposed at two ends of the data cable. In the foregoing arrangement manner, the magnet module 510 of the mobile intelligent terminal can attract the metal pad 520 at one end of the charging cable, and the magnet module 510 in the housing 20 of the charger can attract the metal pad 520 at the other end of the charging cable, causing the light transmissive sheet 210 of the mobile intelligent terminal to be aligned with one end of the optical fiber 821 of the charging cable, and the light transmissive sheet 810 of the charger to be aligned the other end of the optical fiber 821 of the charging cable, so that the external information interface 200 of the mobile intelligent terminal is coupled to the optical transmission interface 800 of the charger by using the charging cable.

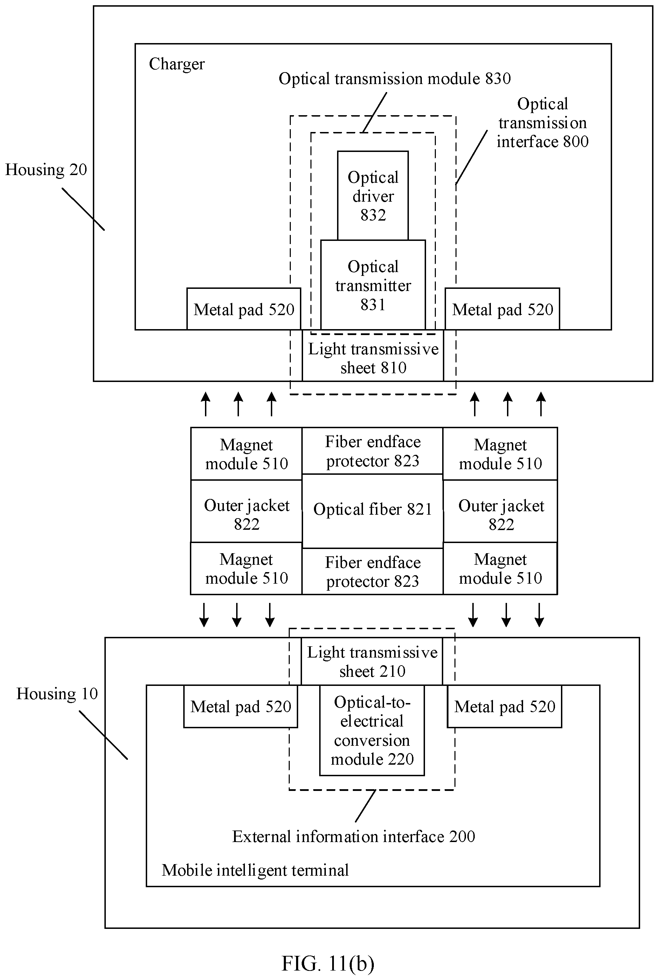

Referring to FIG. 11(b), in a second implementable arrangement manner, a metal pad 520 is disposed inside each of the housings 20 of the mobile intelligent terminal and the charger, and magnet modules 510 are correspondingly disposed at two ends of the data cable. In the foregoing arrangement manner, the magnet module 510 at one end of the charging cable can attract the metal pad 520 of the mobile intelligent terminal, and the magnet module 510 at the other end of the charging cable can attract the metal pad 520 in the housing 20 of the charger, causing one end of the optical fiber 821 of the charging cable to be aligned with the light transmissive sheet 210 of the mobile intelligent terminal, and the other end of the optical fiber 821 of the charging cable to be aligned the light transmissive sheet 810 of the charger, so that the external information interface 200 of the mobile intelligent terminal is coupled to the optical transmission interface 800 of the charger by using the charging cable.

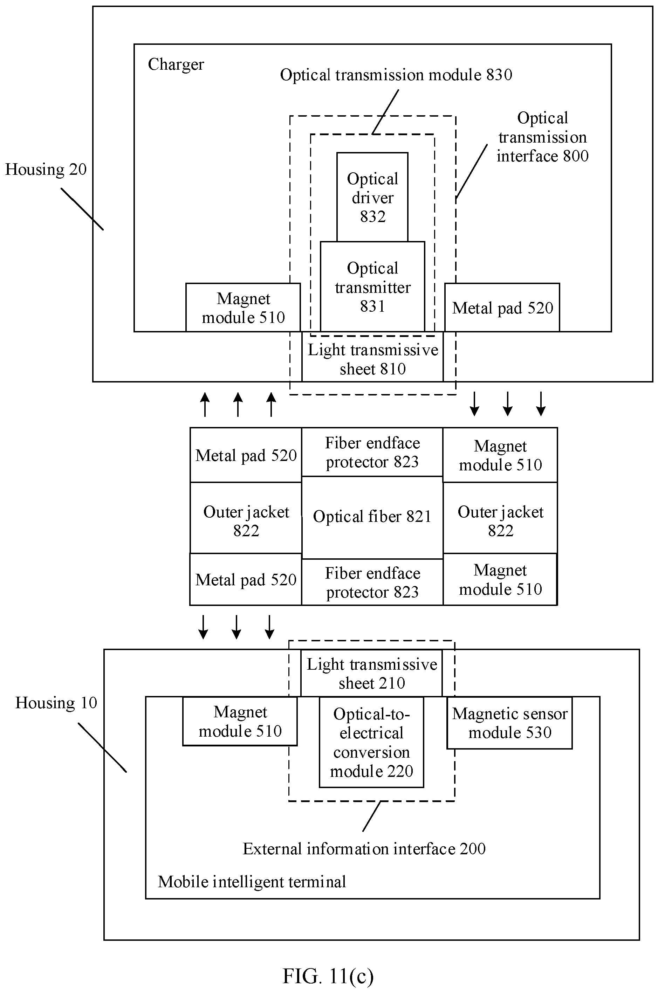

Referring to FIG. 11(c), in a third implementable arrangement manner, one side of the external information interface 200 of the mobile intelligent terminal is provided with a magnet module 510, and the other side is provided with a magnetic sensor module 530. One side of the optical transmission interface 800 of the housing 20 of the charger is provided with a magnet module 510, and the other side is provided with a metal pad 520. A magnet module 510 and a metal pad 520 are disposed at both ends of the charging cable corresponding to the mobile intelligent terminal and the charger. In the foregoing arrangement manner, when one end of the charging cable and the external information interface 200 of the mobile intelligent terminal approach each other, the magnetic sensor module 530 of the mobile intelligent terminal can sense a small-to-large change in a magnetic field of the magnet module 510 of the charging cable, and further magnetism of the magnet module 510 of the mobile intelligent terminal is activated, so that the magnet module 510 of the mobile intelligent terminal actively attracts the metal pad 520 at one end of the charging cable, causing the light transmissive sheet 210 of the mobile intelligent terminal to be aligned with one end of the optical fiber 821 of the charging cable. In addition, when the other end of the charging cable and the optical transmission interface 800 of the charger approach each other, the magnet module 510 at the other end of the charging cable attracts the metal pad 520 in the housing 20 of the charger, and the magnet module 510 in the housing 20 of the charger attracts the metal pad 520 at the other end of the charging cable, causing the light transmissive sheet 810 of the charger to be aligned with one end of the optical fiber 821 of the charging cable, so that the external information interface 200 of the mobile intelligent terminal is coupled to the optical transmission interface 800 of the charger by using the charging cable.

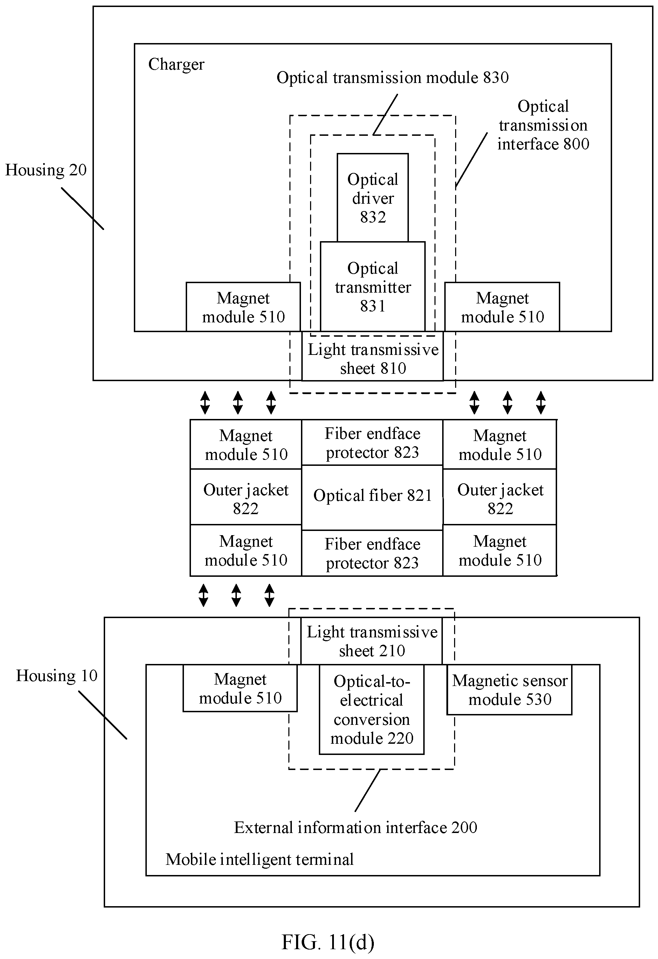

Referring to FIG. 11(d), in a fourth implementable arrangement manner, one side of the external information interface 200 of the mobile intelligent terminal is provided with a magnet module 510, and the other side is provided with a magnetic sensor module 530. Both sides of the optical transmission interface 800 of the housing 20 of the charger are provided with a magnet module 510. Magnet modules 510 are disposed at both ends of the data cable corresponding to the mobile intelligent terminal and the charger. In the foregoing arrangement manner, when one end of the charging cable and the external information interface 200 of the mobile intelligent terminal approach each other, the magnetic sensor module 530 of the mobile intelligent terminal can sense a small-to-large change in a magnetic field of the magnet module 510 of the charging cable, and further magnetism of the magnet module 510 of the mobile intelligent terminal is activated, so that the magnet module 510 of the mobile intelligent terminal actively attracts the magnet module 510 at one end of the charging cable, causing the light transmissive sheet 210 of the mobile intelligent terminal to be aligned with one end of the optical fiber 821 of the charging cable. In addition, when the other end of the charging cable and the optical transmission interface 800 of the charger approach each other, the magnet module at the other end of the charging cable attracts the magnet module 510 in the housing 20 of the charger, causing the light transmissive sheet 810 of the charger to be aligned with one end of the optical fiber 821 of the charging cable, so that the external information interface 200 of the mobile intelligent terminal is coupled to the optical transmission interface 800 of the charger by using the charging cable. In addition, because both sides of the attraction are magnet modules 510, the mobile intelligent terminal is fixed to the charger more tightly and not easily loosened.

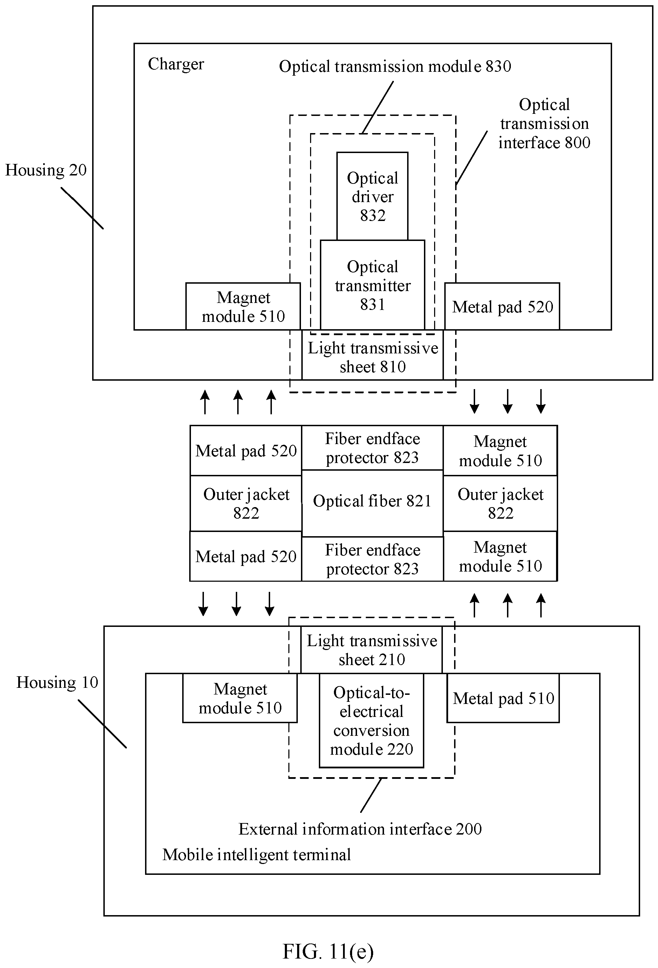

Referring to FIG. 11(e), in a fifth implementable arrangement manner, one side of the external information interface 200 of the mobile intelligent terminal is provided with a magnet module 510, and the other side is provided with a metal pad 520. One side of the optical transmission interface 800 of the housing 20 of the charger is provided with a magnet module 510, and the other side is provided with a metal pad 520. A magnet module 510 and a metal pad 520 are disposed at both ends of the charging cable corresponding to the mobile intelligent terminal and the charger. In addition, in a preferred solution, magnetic polarities of the magnet module 510 of the mobile intelligent terminal, the magnet module 510 in the housing 20 of the charger, and the magnet module 510 of the charging cable are the same. In the foregoing arrangement manner, when one end of the charging cable and the external information interface 200 of the mobile intelligent terminal approach each other, the magnet module 510 at one end of the charging cable attracts the metal pad 520 of the mobile intelligent terminal, and the magnet module 510 of the mobile intelligent terminal attracts the metal pad 520 at one end of the charging cable, causing the light transmissive sheet 210 of the mobile intelligent terminal to be aligned with one end of the optical fiber 821 of the charging cable. In addition, when the other end of the charging cable and the optical transmission interface 800 of the charger approach each other, the magnet module 510 at the other end of the charging cable attracts the metal pad 520 in the housing 20 of the charger, and the magnet module 510 in the housing 20 of the charger attracts the metal pad 520 at the other end of the charging cable, causing the light transmissive sheet 810 of the charger to be aligned with one end of the optical fiber 821 of the charging cable, so that the external information interface 200 of the mobile intelligent terminal is coupled to the optical transmission interface 800 of the charger by using the charging cable. In addition, the magnetic polarities of the magnet module 510 of the mobile intelligent terminal, the magnet module 510 in the housing 20 of the charger, and the magnet module 510 of the charging cable are all the same and mutually exclusive. Therefore, regardless of any angle at which a user causes the mobile intelligent terminal or the charger to approach the charging cable, the magnet modules 510 of the mobile intelligent terminal or the charger and the charging cable automatically find the corresponding metal pads 520 to be adsorbed, thereby implementing a foolproof design.

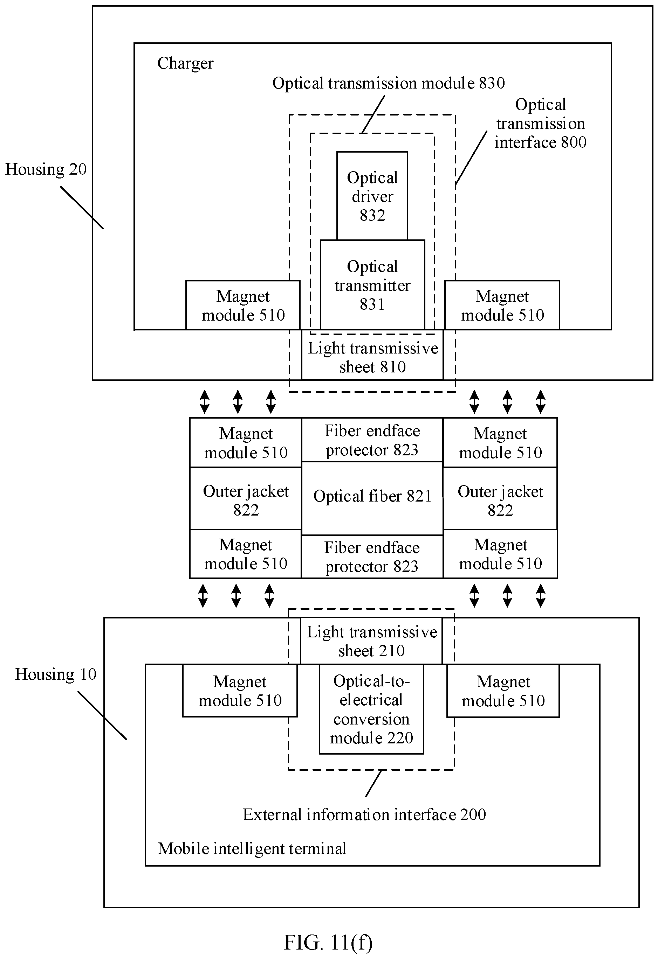

Referring to FIG. 11(f), in a sixth implementable arrangement manner, both the housing 20 of the charger and the mobile intelligent terminal are provided with magnet modules 510 and the magnetic module of the charging cable is also a magnet module 510, causing the mobile intelligent terminal and the charging cable to attract each other by using the magnet modules 510, and the charger and the charging cable to also attract each other by using the magnet modules 510, so that the external information interface 200 of the mobile intelligent terminal is coupled to the optical transmission interface 800 of the charger by using the charging cable. In addition, because both sides of the attraction are magnet modules 510, the mobile intelligent terminal is fixed to the charger more tightly and not easily loosened.

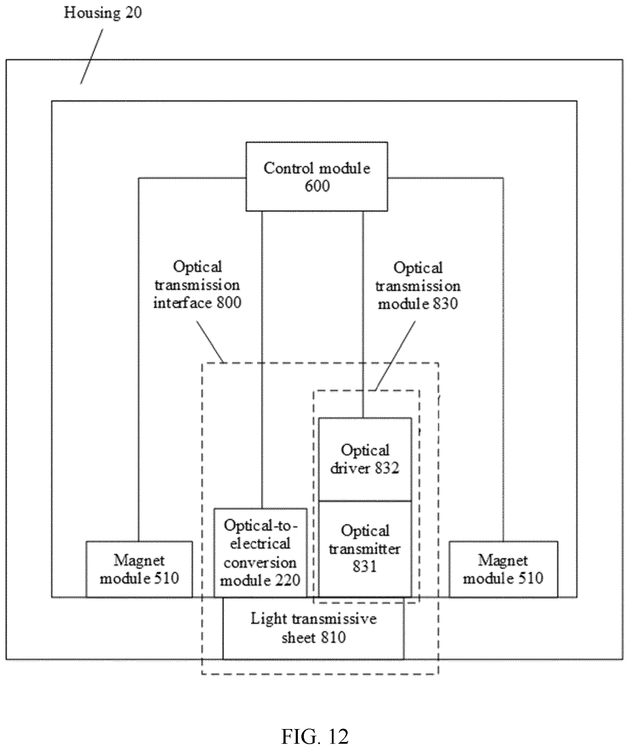

FIG. 12 is a schematic structural diagram of a fourth embodiment of the charger.

As shown in FIG. 12, in an optional implementation, the charger, with reference to the structure of the charger shown above, further includes a control module 600 disposed inside the housing 20. The control module is configured to control an electromagnetic attraction force of the magnet module 510. In addition, the control module is further configured to control a drive pulse ratio or a power value of output light of the optical driver 832, to control power to be used by the optical transmitter 831 to transmit an optical signal. Further, as shown in FIG. 12, the charger further includes an optical-to-electrical conversion module 220 disposed inside the housing 20. The optical-to-electrical conversion module 220 is configured to convert an optical signal that passes through the light transmissive sheet 810 into an electric signal. For example, an optical signal that is sent by the mobile intelligent terminal and that carries battery information (information such as a manufacturer, a serial number, a designed capacity, an actual capacity, a quantity of cycles, and a temperature), battery level information, or optical communication rate information of the mobile intelligent terminal is received. In addition, an optical signal that is sent by the mobile intelligent terminal in a charging process and that carries received optical power, available battery receive power, or real-time battery level information. Therefore, the charger can send an optical signal based on the foregoing information by using optical power that can be withstood by the mobile intelligent terminal, thereby ensuring safety in the charging process.

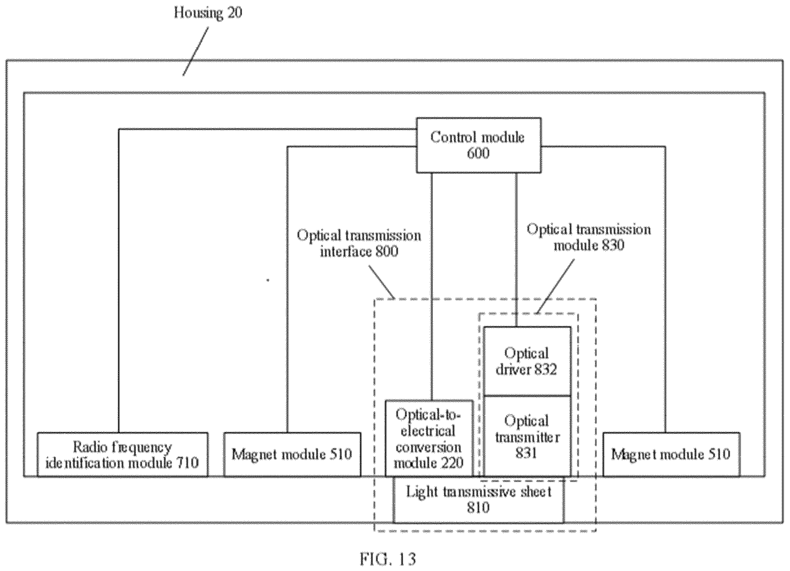

FIG. 13 is a schematic structural diagram of a fifth embodiment of the charger.

As shown in FIG. 13, in an optional implementation, the charger further includes a radio frequency identification module 710 disposed inside the housing 20. The radio frequency identification module 710 is configured to read authentication information of the charging cable.

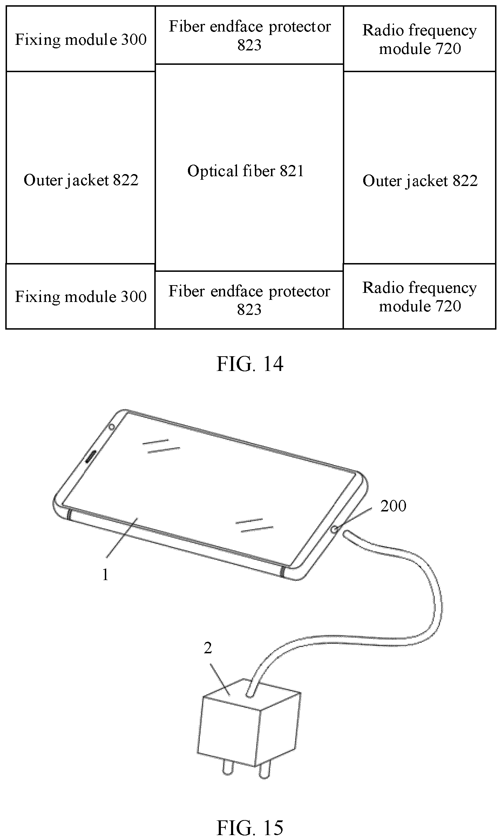

In addition, the charging cable used in cooperation with the mobile intelligent terminal or the charger provided with the radio frequency identification module 710 may be shown in FIG. 14. To be specific, one end or both ends of the charging cable is/are provided with a radio frequency module 720/radio frequency modules 720, and the radio frequency module 720 is configured to record authentication information of the charging cable. Specifically, the radio frequency module 720 may be an RFID (radio frequency identification, radio frequency identification) label, for example, an RFID sticker or an RFID chip, that records the authentication information. The authentication information may include a product serial number of the charging cable, and the like.

According to the mobile intelligent terminal and the charger provided in the embodiments of this application, an embodiment of this application further provides a mobile computer system. FIG. 15 is a schematic diagram of a mobile computer system. The mobile computer system includes a mobile intelligent terminal 1 and a charger 2. The charger is configured to convert an electric signal into an optical signal. The mobile intelligent terminal is provided with an external information interface 200, configured to convert an optical signal generated by the charger into an electric signal, to provide electric energy for an electronic device in the mobile intelligent terminal.

According to the mobile computer system provided above, when a user needs to charge the mobile intelligent terminal, the user may connect the charger to the external information interface 200 of the mobile intelligent terminal, so that an optical signal generated by the charger is received by the external information interface 200, and is converted into an electric signal by using the external information interface, to provide electric energy for the electronic device in the mobile intelligent terminal. Therefore, in the technical solution of this application, the mobile intelligent terminal does not need to be provided with a charging interface (for example, a lightning interface, a standard USB interface, a mini USB interface, a micro USB interface, a USB Type-C interface, a Thunderbolt interface, or a DisplayPort interface). Therefore, even after the mobile intelligent terminal is immersed in water, the user can charge the mobile intelligent terminal or transmit data to or from the mobile intelligent terminal without worrying about short-circuiting of the mobile intelligent terminal, the charger, or a charging cable, thereby ensuring personal safety of the user.

According to the mobile intelligent terminal, and the mobile computer system provided in the embodiments of this application, an embodiment of this application further provides an optical charging control method.

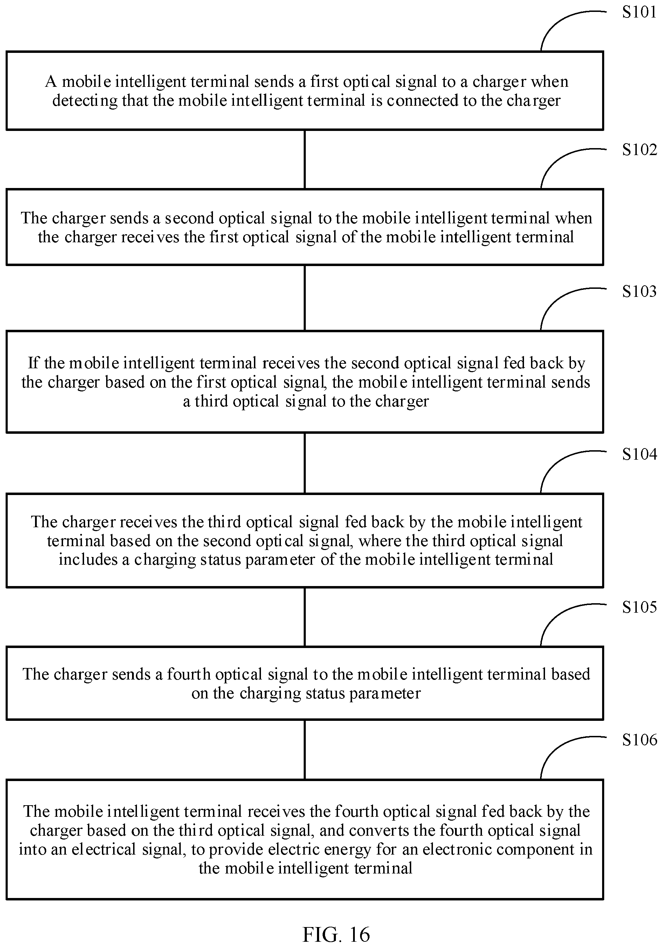

FIG. 16 is a flowchart of an optical charging method.

As shown in FIG. 16, the method includes the following steps.

Step 101: A mobile intelligent terminal sends a first optical signal to a charger when detecting that the mobile intelligent terminal is connected to the charger.

Specifically, the mobile intelligent terminal may detect, by using a magnetic sensor module, that the mobile intelligent terminal is already connected to the charger, and then output the first optical signal to the charger. The first optical signal may be a first wavelength signal, and may carry parameter information of the mobile intelligent terminal, for example, battery information, battery level information, and information about an optical communication rate supported by the terminal.

Step S102: The charger sends a second optical signal to the mobile intelligent terminal when the charger receives the first optical signal of the mobile intelligent terminal.

Specifically, the second optical signal may be a second wavelength signal, and may carry parameter information of the charger, for example, a working mode (a simplex mode, a time division multiplexing mode, a wavelength division multiplexing mode, or the like) of the charger, a charger serial number (ID), and maximum output optical power of the charger.

In addition, in an implementable implementation, the first wavelength signal and the second wavelength signal may be optical signals of different wavelengths, so that the mobile intelligent terminal and the charger can send optical signals to each other in a wavelength division multiplexing mode. In another implementable implementation, the first wavelength signal and the second wavelength signal may be optical signals of a same wavelength, so that the mobile intelligent terminal and the charger can send optical signals to each other in a time division multiplexing mode.

Step S103: If the mobile intelligent terminal receives the second optical signal fed back by the charger based on the first optical signal, the mobile intelligent terminal sends a third optical signal to the charger.

If the mobile intelligent terminal receives the second optical signal fed back by the charger, it indicates that the charger can successfully receive the first optical signal sent by the mobile intelligent terminal. In other words, bidirectional optical signal transmission between the mobile intelligent terminal and the charger is smooth. If the mobile intelligent terminal and the charger are connected by using the charger, this indicates that an optical path of an optical fiber of the charging cable is smooth and no fiber is broken or knotted. Therefore, when receiving the second optical signal, the mobile intelligent terminal sends the third optical signal to the charger.

Specifically, the third optical signal may be a first wavelength signal, used to indicate to the charger that the mobile intelligent terminal is maintaining a charging mode. In a charging process, the mobile intelligent terminal sends the third signal to the charger continuously or in pulses, and the third optical signal carries a charging status parameter of the mobile intelligent terminal, for example, received optical power, available battery receive power, or real-time battery level information.

In addition, if the mobile intelligent terminal does not receive the second optical signal fed back by the charger, it indicates that the charging cable may not be properly connected to the charger or the charging cable may be knotted. In this case, the mobile intelligent terminal may be used to remind a user to check the charging cable.

Step S104: The charger receives the third optical signal fed back by the mobile intelligent terminal based on the second optical signal, where the third optical signal includes the charging status parameter of the mobile intelligent terminal.

Step S105: The charger sends a fourth optical signal to the mobile intelligent terminal based on the charging status parameter.

Specifically, the charger may determine optical power of the fourth optical signal based on the charging status parameter, for example, received optical power of the mobile intelligent terminal, available battery receive power, or real-time power information, and send the fourth optical signal to the mobile intelligent terminal by using the determined optical power. The fourth optical signal may be a second wavelength signal.

Step S106: The mobile intelligent terminal receives the fourth optical signal fed back by the charger based on the third optical signal, and converts the fourth optical signal into an electric signal, to provide electric energy for an electronic component in the mobile intelligent terminal.

Therefore, before the charger starts to charge the mobile intelligent terminal, it is first detected whether the mobile intelligent terminal is connected to the charger and whether an optical path is smooth, so that an optical signal of the charger or the mobile intelligent terminal is prevented from entering an environment, thereby avoiding damage caused by the optical signal to a user, and ensuring optical charging safety.

In addition, in an optional implementation, when a battery level of the mobile intelligent terminal reaches a preset value, the charger may be notified, by using the third optical signal, to stop outputting the fourth optical signal. For example, the mobile intelligent terminal adds a stop instruction to the third optical signal, so that the charger stops outputting the fourth optical signal according to the stop instruction. Alternatively, the mobile intelligent terminal stops outputting the third optical signal, so that when detecting that the third optical signal is not received, the charger stops outputting the fourth optical signal.

In addition, to prevent a case of overcharging after a battery is fully charged, the mobile intelligent terminal in this application may alternatively be disconnected from the charging cable after notifying the charger to stop outputting the fourth optical signal. For example, based on the structure of the mobile intelligent terminal shown in FIG. 5, the control module controls the magnet module to remove magnetism, so that the charging cable is disconnected from the mobile intelligent terminal.

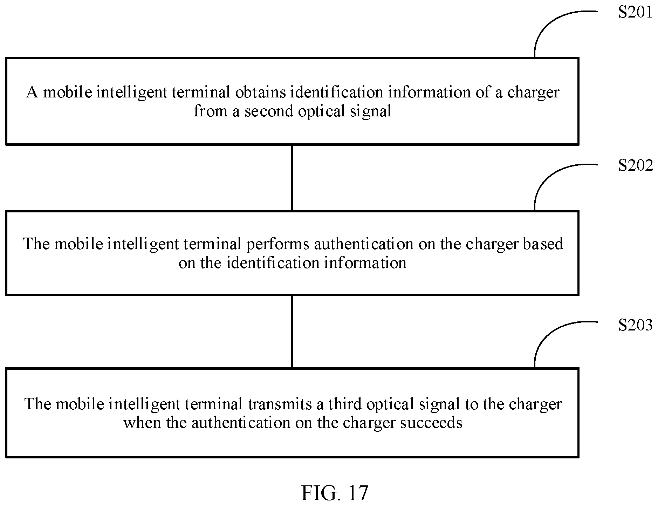

FIG. 17 is a flowchart of step S103 of the optical charging method.

As shown in FIG. 17, in an optional implementation, step S103 includes the following steps.

Step S201: The mobile intelligent terminal obtains identification information of the charger from the second optical signal.

Specifically, the second optical signal carries the identification information of the charger, and the identification information may include an identity, a product serial number, and the like of the charger.

Step S202: The mobile intelligent terminal performs authentication on the charger based on the identification information.

Specifically, if the mobile intelligent terminal obtains the identification information of the charger from the second optical signal, the mobile intelligent terminal verifies validity of the identification information. If the identification information is valid, the authentication on the charger succeeds, or if the identification information is invalid, the authentication on the charger fails. In addition, if the mobile intelligent terminal does not obtain the identification information of the charger from the second optical signal, the authentication on the charger fails.

Step S203: The mobile intelligent terminal transmits the third optical signal to the charger when the authentication on the charger succeeds.

Therefore, before sending the third optical signal to the charger, the mobile intelligent terminal performs authentication on the charger, to ensure that the mobile intelligent terminal is charged by using only the charger that has been authenticated, for example, an original charger adapted to the mobile intelligent terminal or a third-party charger that has been authenticated by a manufacturer of the mobile intelligent terminal. Therefore, optical charging safety is ensured.

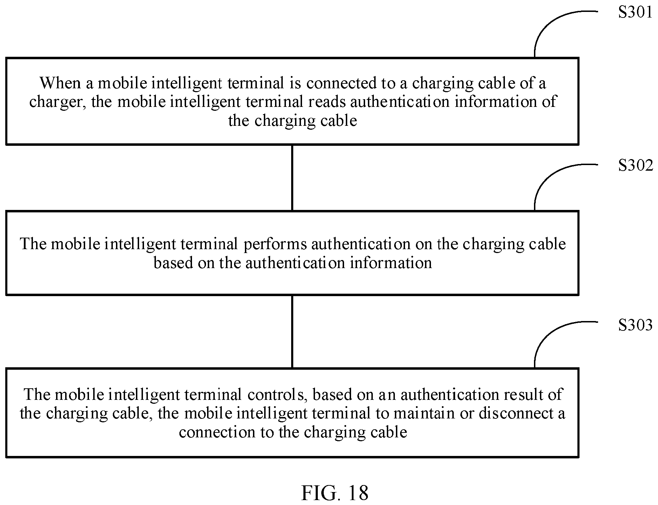

In an optional implementation, this application further provides a procedure in which a mobile intelligent terminal performs authentication on a charger. FIG. 18 is a flowchart of performing authentication on a charger by a mobile intelligent terminal. The following steps are included.

Step S301: When the mobile intelligent terminal is connected to a charging cable of the charger, the mobile intelligent terminal reads authentication information of the charging cable.

Specifically, one end or both ends of the charging cable is/are provided with a radio frequency module/radio frequency modules, for example, an RFID label (including an RFID sticker or an RFID chip) that records the authentication information. The mobile intelligent terminal reads the authentication information in the RFID label by using a radio frequency identification module, for example, an RFID reader.

Step S302: The mobile intelligent terminal performs authentication on the charging cable based on the authentication information.

Specifically, if the mobile intelligent terminal reads the authentication information of the charging cable, the mobile intelligent terminal verifies validity of the authentication information. If the authentication information is valid, the authentication on the charging cable succeeds, or if the authentication information is invalid, the authentication on the charging cable fails. In addition, if the mobile intelligent terminal does not read the authentication information of the charging cable, the authentication on the charging cable fails.

Step S303: The mobile intelligent terminal controls, based on an authentication result of the charging cable, the mobile intelligent terminal to maintain or disconnect a connection to the charging cable.

For example, when the authentication on the charging cable fails, the mobile intelligent terminal disconnects from the charging cable. When the authentication on the charging cable succeeds, the mobile intelligent terminal remains connected to the charging cable.

Therefore, when the mobile intelligent terminal is connected to the charger by using the charging cable, the mobile intelligent terminal performs authentication on the charging cable, to ensure that the mobile intelligent terminal is charged by using only the charging cable that has been authenticated, for example, an original charging cable adapted to the mobile intelligent terminal or a third-party charging cable that has been authenticated by a manufacturer of the mobile intelligent terminal. Therefore, optical charging safety is ensured.

The objectives, technical solutions, and benefits of the present invention are further described in detail in the foregoing specific embodiments. It should be understood that the foregoing descriptions are merely specific embodiments of the present invention, but are not intended to limit the protection scope of the present invention. Any modification, equivalent replacement, or improvement made based on the technical solutions of the present invention shall fall within the protection scope of the present invention.

## Claims

1. A waterproof mobile intelligent terminal, wherein a housing (10) of the mobile intelligent terminal is provided with a waterproof structure, to prevent water from causing damage to an electronic device inside the mobile intelligent terminal when the mobile intelligent terminal falls into water, the waterproof structure comprises a waterproof external information interface (200);
wherein the external information interface (200) comprises a light transmissive sheet (210) of the housing (10) and an optical-to-electrical conversion module (220) disposed inside the housing, wherein the light transmissive sheet (210) is arranged to provide an optical path through the housing (10) to allow an optical signal to enter the housing (10) through the light transmissive sheet (210) and to reach the optical-to-electrical conversion module (220) disposed inside the housing;
wherein the optical-to-electrical conversion module (220) is configured to convert the optical signal that is adapted to pass through the light transmissive sheet (210) into an electric signal;
wherein the housing (10) of the mobile intelligent terminal is further provided with a fixing structure, and the fixing structure is configured to fix a charger, and enable an optical transmission interface of the charger to be coupled to the external information interface;
wherein the fixing structure is a magnetic module (510, 520), the magnetic module (510, 520) comprises a magnet module configured to provide an electromagnetic attraction force, and the magnetic module is configured to fix the mobile intelligent terminal and the charger by using the electromagnetic attraction force; and
wherein the mobile intelligent terminal further comprises a control module (600) disposed inside the housing (10), and the control module is configured to control the electromagnetic attraction force of the magnet module.

2. The mobile intelligent terminal according to claim 1, wherein the mobile intelligent terminal further comprises a power management module (410), and the power management module is configured to provide electric energy for the mobile intelligent terminal in the mobile intelligent terminal by using the electric signal converted by the optical-to-electrical conversion module.

3. The mobile intelligent terminal according to claim 1 or 2, wherein the magnetic module further comprises a metal pad (510, 520) corresponding to the magnet module.

4. The mobile intelligent terminal according to any one of claims 1 to 3, wherein the mobile intelligent terminal further comprises a radio frequency identification module disposed inside the housing (10), and the radio frequency identification module is configured to read authentication information of the charger or a charging cable.

5. The mobile intelligent terminal according to any one of claims 1 to 4, wherein the mobile intelligent terminal further comprises a magnetic sensor module (530) and an optical transmission module (230) that are disposed inside the housing (10);
wherein the magnetic sensor module (530) is configured to detect a connection status between the mobile intelligent terminal and the charger; and
wherein the optical transmission module is configured to transmit an optical signal according to an indication of the control module (600) when the mobile intelligent terminal is connected to the charger

6. A mobile computer system comprising:
- a mobile intelligent terminal according to any one of the preceding claims; and
- a charger, wherein the charger comprises an optical transmission interface (800), the optical transmission interface comprises a light transmissive sheet (810) disposed on a housing (20) of the charger, and an optical transmission module (830) disposed in the housing (20) of the charger;
wherein the light transmissive sheet (810) of the charger is arranged to provide an optical path through the housing (20) of the charger to allow an optical signal to enter the housing (20) through the light transmissive sheet (210) and to reach the optical transmission module (830) disposed in the housing (20) of the charger;
wherein the optical transmission module (830) is configured to transmit the optical signal through the light transmissive sheet (810) of the charger, wherein the optical signal carries data;
wherein the charger further comprises a fixing structure (300), and the fixing structure (300) is configured to fix a mobile intelligent terminal and the charger, and enable the optical transmission interface (800) to be coupled to an external information interface (200) of the mobile intelligent terminal; and
wherein the fixing structure is a magnetic module (520), and the magnetic module (520) comprises a magnet module configured to provide an electromagnetic attraction force and/or a metal pad corresponding to the magnet module.

7. The system according to claim 6, wherein the charger further comprises a control module (600) disposed inside the housing (20) of the charger, wherein the control module (600) is configured to control the electromagnetic attraction force of the magnet module.

8. The system according to claim 6, wherein the charger further comprises an optical-to-electrical conversion module (830) disposed inside the housing (20) of the charger, wherein the optical-to-electrical conversion module (830) is configured to convert the optical signal sent by the mobile intelligent terminal that is adapted to pass through the light transmissive sheet (810) of the charger into an electric signal.

9. The system according to claim 6, wherein the charger further comprises a radio frequency identification module (710) disposed inside the housing (20) of the charger, wherein the radio frequency identification module (710) is configured to read authentication information of a charging cable.

## Patentansprüche

1. Wasserdichtes mobiles intelligentes Endgerät, wobei ein Gehäuse (10) des mobilen intelligenten Endgeräts mit einer wasserdichten Struktur bereitgestellt wird, um zu verhindern, dass Wasser Schäden an einer elektronischen Vorrichtung innerhalb des mobilen intelligenten Endgeräts verursacht, wenn das mobile intelligente Endgerät in Wasser fällt, wobei die wasserdichte Struktur eine wasserdichte externe Informationsschnittstelle (200) umfasst;
wobei die externe Informationsschnittstelle (200) eine lichtdurchlässige Folie (210) des Gehäuses (10) und ein optisch-elektrisches Umwandlungsmodul (220) umfasst, das innerhalb des Gehäuses angebracht ist, wobei die lichtdurchlässige Folie (210) eingerichtet ist zum Bereitstellen eines optischen Pfads durch das Gehäuse (10), um einem optischen Signal zu erlauben, durch die lichtdurchlässige Folie (210) in das Gehäuse (10) einzudringen und das optisch-elektrische Umwandlungsmodul (220) zu erreichen, das innerhalb des Gehäuses angebracht ist;
wobei das optisch-elektrische Umwandlungsmodul (220) konfiguriert ist zum Umwandeln des optischen Signals, das geeignet ist, die lichtdurchlässige Folie (210) zu durchqueren, in ein elektrisches Signal;
wobei das Gehäuse (10) des mobilen intelligenten Endgeräts ferner mit einer Befestigungsstruktur bereitgestellt wird, und wobei die Befestigungsstruktur konfiguriert ist zum Befestigen eines Ladegeräts und zum Ermöglichen, dass eine optische Übertragungsschnittstelle des Ladegeräts mit der externen Informationsschnittstelle gekoppelt wird;
wobei die Befestigungsstruktur ein magnetisches Modul (510, 520) ist, wobei das magnetische Modul (510, 520) ein Magnetmodul umfasst, das konfiguriert ist zum Bereitstellen einer elektromagnetischen Anziehungskraft, und wobei das magnetische Modul konfiguriert ist zum Befestigen des mobilen intelligenten Endgeräts und des Ladegeräts, indem die elektromagnetische Anziehungskraft verwendet wird; und
wobei das mobile intelligente Endgerät ferner ein Steuermodul (600) umfasst, das innerhalb des Gehäuses (10) angebracht ist, und wobei das Steuermodul konfiguriert ist zum Steuern der elektromagnetischen Anziehungskraft des Magnetmoduls.

2. Mobiles intelligentes Endgerät nach Anspruch 1, wobei das mobile intelligente Endgerät ferner ein Leistungsverwaltungsmodul (410) umfasst, und wobei das Leistungsverwaltungsmodul konfiguriert ist zum Bereitstellen von elektrischer Energie für das mobile intelligente Endgerät in dem mobilen intelligenten Endgerät, indem das elektrische Signal verwendet wird, das von dem optisch-elektrischen Umwandlungsmodul umgewandelt wurde.

3. Mobiles intelligentes Endgerät nach Anspruch 1 oder 2, wobei das magnetische Modul ferner eine Metallanschlussfläche (510, 520) umfasst, die dem Magnetmodul entspricht.

4. Mobiles intelligentes Endgerät nach einem der Ansprüche 1 bis 3, wobei das mobile intelligente Endgerät ferner ein Hochfrequenz-Identifikationsmodul umfasst, das innerhalb des Gehäuses (10) angebracht ist, und wobei das Hochfrequenz-Identifikationsmodul konfiguriert ist zum Lesen von Authentifizierungsinformationen des Ladegeräts oder eines Ladekabels.

5. Mobiles intelligentes Endgerät nach einem der Ansprüche 1 bis 4, wobei das mobile intelligente Endgerät ferner ein magnetisches Sensormodul (530) und ein optisches Übertragungsmodul (230) umfasst, die innerhalb des Gehäuses (10) angebracht sind;
wobei das magnetische Sensormodul (530) konfiguriert ist zum Erkennen eines Verbindungszustands zwischen dem mobilen intelligenten Endgerät und dem Ladegerät; und
wobei das optische Übertragungsmodul konfiguriert ist zum Übertragen eines optischen Signals gemäß einer Anzeige des Steuermoduls (600), wenn das mobile intelligente Endgerät mit dem Ladegerät verbunden ist.

6. Mobiles Computersystem, umfassend:
- ein mobiles intelligentes Endgerät nach einem der vorhergehenden Ansprüche; und
- ein Ladegerät, wobei das Ladegerät eine optische Übertragungsschnittstelle (800) umfasst, wobei die optische Übertragungsschnittstelle eine lichtdurchlässige Folie (810), die an einem Gehäuse (20) des Ladegeräts angebracht ist, und ein optisches Übertragungsmodul (830) umfasst, das in dem Gehäuse (20) des Ladegeräts angebracht ist;
wobei die lichtdurchlässige Folie (810) des Ladegeräts eingerichtet ist zum Bereitstellen eines optischen Pfads durch das Gehäuse (20) des Ladegeräts, um einem optischen Signal zu erlauben, durch die lichtdurchlässige Folie (210) in das Gehäuse (20) einzudringen und das optische Übertragungsmodul (830) zu erreichen, das innerhalb des Gehäuses (20) des Ladegeräts angebracht ist;
wobei das optische Übertragungsmodul (830) konfiguriert ist zum Übertragen des optischen Signals durch die lichtdurchlässige Folie (810) des Ladegeräts, wobei das optische Signal Daten transportiert;
wobei das Ladegerät ferner eine Befestigungsstruktur (300) umfasst, und wobei die Befestigungsstruktur (300) konfiguriert ist zum Befestigen eines mobilen intelligenten Endgeräts und des Ladegeräts und zum Ermöglichen, dass die optische Übertragungsschnittstelle (800) mit einer externen Informationsschnittstelle (200) des mobilen intelligenten Endgeräts gekoppelt wird; und
wobei die Befestigungsstruktur ein magnetisches Modul (520) ist, und wobei das magnetische Modul (520) ein Magnetmodul umfasst, das konfiguriert ist zum Bereitstellen einer elektromagnetischen Anziehungskraft und/oder einer Metallanschlussfläche, die dem Magnetmodul entspricht.

7. System nach Anspruch 6, wobei das Ladegerät ferner ein Steuermodul (600) umfasst, das innerhalb des Gehäuses (20) des Ladegeräts angebracht ist, wobei das Steuermodul (600) konfiguriert ist zum Steuern der elektromagnetischen Anziehungskraft des Magnetmoduls.

8. System nach Anspruch 6, wobei das Ladegerät ferner ein optisch-elektrisches Umwandlungsmodul (830) umfasst, das innerhalb des Gehäuses (20) des Ladegeräts angebracht ist, wobei das optisch-elektrische Umwandlungsmodul (830) konfiguriert ist zum Umwandeln des optischen Signals, das von dem mobilen intelligenten Endgerät gesendet wird und das geeignet ist, die lichtdurchlässige Folie (810) des Ladegeräts zu durchqueren, in ein elektrisches Signal.

9. System nach Anspruch 6, wobei das Ladegerät ferner ein Hochfrequenz-Identifikationsmodul (710) umfasst, das innerhalb des Gehäuses (20) des Ladegeräts angebracht ist, wobei das Hochfrequenz-Identifikationsmodul (710) konfiguriert ist zum Lesen von Authentifizierungsinformationen eines Ladekabels.

## Revendications

1. Terminal intelligent mobile étanche à l'eau, dans lequel un boîtier (10) du terminal intelligent mobile est pourvu d'une structure étanche à l'eau, pour empêcher de l'eau de provoquer un endommagement d'un dispositif électronique à l'intérieur du terminal intelligent mobile lorsque le terminal intelligent mobile tombe dans l'eau, la structure étanche à l'eau comprend une interface d'informations externe (200) étanche à l'eau ;
dans lequel l'interface d'informations externe (200) comprend une feuille transmettant la lumière (210) du boîtier (10) et un module de conversion optique-électrique (220) disposé à l'intérieur du boîtier, dans lequel la feuille transmettant la lumière (210) est agencée pour fournir un chemin optique à travers le boîtier (10) afin de permettre à un signal optique d'entrer dans le boîtier (10) à travers la feuille transmettant la lumière (210) et d'atteindre le module de conversion optique-électrique (220) disposé à l'intérieur du boîtier ;
dans lequel le module de conversion optique-électrique (220) est configuré pour convertir le signal optique qui est conçu pour passer à travers la feuille transmettant la lumière (210) en un signal électrique ;
dans lequel le boîtier (10) du terminal intelligent mobile est en outre pourvu d'une structure de fixation, et la structure de fixation est configurée pour fixer un chargeur, et rendre une interface de transmission optique du chargeur à même d'être couplée à l'interface d'informations externe ;
dans lequel la structure de fixation est un module magnétique (510, 520), le module magnétique (510, 520) comprend un module d'aimant configuré pour fournir une force d'attraction électromagnétique, et le module magnétique est configuré pour fixer le terminal intelligent mobile et le chargeur en utilisant la force d'attraction électromagnétique ; et
dans lequel le terminal intelligent mobile comprend en outre un module de commande (600) disposé à l'intérieur du boîtier (10), et le module de commande est configuré pour commander la force d'attraction électromagnétique du module d'aimant.

2. Terminal intelligent mobile selon la revendication 1, dans lequel le terminal intelligent mobile comprend en outre un module de gestion de puissance (410), et le module de gestion de puissance est configuré pour fournir de l'énergie électrique pour le terminal intelligent mobile dans le terminal intelligent mobile en utilisant le signal électrique converti par le module de conversion optique-électrique.

3. Terminal intelligent mobile selon la revendication 1 ou la revendication 2, dans lequel le module magnétique comprend en outre un tampon métallique (510, 520) correspondant au module d'aimant.

4. Terminal intelligent mobile selon l'une quelconque des revendications 1 à 3, dans lequel le terminal intelligent mobile comprend en outre un module d'identification par radiofréquence disposé à l'intérieur du boîtier (10), et le module d'identification par radiofréquence est configuré pour lire des informations d'authentification du chargeur ou d'un câble de charge.

5. Terminal intelligent mobile selon l'une quelconque des revendications 1 à 4, dans lequel le terminal intelligent mobile comprend en outre un module de capteur magnétique (530) et un module de transmission optique (230) qui sont disposés à l'intérieur du boîtier (10) ; dans lequel le module de capteur magnétique (530) est configuré pour détecter un statut de connexion entre le terminal intelligent mobile et le chargeur ; et
dans lequel le module de transmission optique est configuré pour transmettre un signal optique en fonction d'une indication du module de commande (600) lorsque le terminal intelligent mobile est connecté au chargeur.

6. Système informatique mobile comprenant :
- un terminal intelligent mobile selon l'une quelconque des revendications précédentes ; et
- un chargeur, dans lequel le chargeur comprend une interface de transmission optique (800), l'interface de transmission optique comprend une feuille transmettant la lumière (810) disposée sur un boîtier (20) du chargeur, et un module de transmission optique (830) disposé dans le boîtier (20) du chargeur ;
dans lequel la feuille transmettant la lumière (810) du chargeur est agencée pour fournir un chemin optique à travers le boîtier (20) du chargeur afin de permettre à un signal optique d'entrer dans le boîtier (20) à travers la feuille transmettant la lumière (210) et d'atteindre le module de transmission optique (830) disposé dans le boîtier (20) du chargeur ;
dans lequel le module de transmission optique (830) est configuré pour transmettre le signal optique à travers la feuille transmettant la lumière (810) du chargeur, dans lequel le signal optique transporte des données ;
dans lequel le chargeur comprend en outre une structure de fixation (300), et la structure de fixation (300) est configurée pour fixer un terminal intelligent mobile et le chargeur, et rendre l'interface de transmission optique (800) à même d'être couplée à une interface d'informations externe (200) du terminal intelligent mobile ; et
dans lequel la structure de fixation est un module magnétique (520), et le module magnétique (520) comprend un module d'aimant configuré pour fournir une force d'attraction électromagnétique et/ou un tampon métallique correspondant au module d'aimant.

7. Système selon la revendication 6, dans lequel le chargeur comprend en outre un module de commande (600) disposé à l'intérieur du boîtier (20) du chargeur, dans lequel le module de commande (600) est configuré pour commander la force d'attraction électromagnétique du module d'aimant.

8. Système selon la revendication 6, dans lequel le chargeur comprend en outre un module de conversion optique-électrique (830) disposé à l'intérieur du boîtier (20) du chargeur, dans lequel le module de conversion optique-électrique (830) est configuré pour convertir le signal optique envoyé par le terminal intelligent mobile qui est conçu pour passer à travers la feuille transmettant la lumière (810) du chargeur en un signal électrique.

9. Système selon la revendication 6, dans lequel le chargeur comprend en outre un module d'identification par radiofréquence (710) disposé à l'intérieur du boîtier (20) du chargeur, dans lequel le module d'identification par radiofréquence (710) est configuré pour lire des informations d'authentification d'un câble de charge.
